# EUROPÄISCHE PATENTSCHRIFT

(11) **EP 3 518 331 B1**
(45) Veröffentlichungstag und Bekanntmachung des Hinweises auf die Patenterteilung: **19.05.2021**
(21) Anmeldenummer: 18212856.1
(22) Anmeldetag: 17.12.2018
(51) Int. Cl.: H01M 8/1004, H01M 8/1062, H01M 8/0271, H01M 8/0289

(54) **BRENNSTOFFZELLEN-STAPEL MIT VERBESSERTER ISOLIERUNG**
FUEL CELL STACK WITH IMPROVED ISOLATION
EMPILEMENT DE CELLULES À COMBUSTIBLE À ISOLATION AMÉLIORÉE

(30) Priorität: 08.01.2018 LU 100673
(43) Veröffentlichungstag der Anmeldung: 31.07.2019
(73) Patentinhaber: thyssenkrupp Marine Systems GmbH, 24143 Kiel (DE); thyssenkrupp AG, 45143 Essen (DE)
(72) Erfinder: Walter, Andreas, 28790 Schwanewede (DE)
(74) Vertreter: thyssenkrupp Intellectual Property GmbH

(56) Entgegenhaltungen:
- US-A1- 2004 013 932
- US-A1- 2010 068 588

## Beschreibung

Die Erfindung betrifft einen Brennstoffzellen-Stapel mit einer Abfolge von plattenförmigen Elementen, nämlich Membran-Elektroden-Einheiten und Bipolarplatten. Eine typische Anwendung dieses Stapels ist die folgende: Jeder Membran-Elektroden-Einheit wird ein Brenngas, in der Regel Wasserstoff, und ein Oxidationsmittel, z.B. umgebende Luft oder reiner Sauerstoff, zugeführt. Der Brennstoffzellen- Stapel erzeugt Wasser und liefert hierbei elektrischen Strom und Wärme.

In US 2004/0013932 A1 wird ein Stapel mit Brennstoffzellen (plurality of stacked fuel cells 1) beschrieben. Jede Brennstoffzelle 1 umfasst eine plattenförmigen Membran-Elektroden-Einheit (membrane electrode assembly 5) mit einer Anode (anode membrane 3) und einer Kathode (cathode membrane 4), zwischen denen eine Membran (solid polymer electrolyte 2) angeordnet ist. Die Membran-Elektroden-Einheit 5 ist nach Art eines Sandwich zwischen einer anode gas separator plate 6A und einer cathode gas separator plate 6B eingeklemmt. Die beiden Platten 5A und 5B sind aus Graphit oder Metall und haben unterschiedliche Biegesteifigkeiten (different flexural strength or different flexural modulus).

In US 2010/0068588 A1 wird ein Stapel mit Brennstoffzellen (stack-type fuel cell in which the cells are stacked and fastened) beschrieben. Jede Brennstoffzelle 100 umfasst eine Membran-Elektroden-Einheit (Membrane-Electrode-Assembly - MEA 5) mit einer Anode und einer Kathode (anode 4a and cathode 4b of MEA 5), zwischen denen eine Membran (polymer electrolyte membrane 1) angeordnet ist. Jede MEA 5 befindet sich zwischen einem anode separator 6a und einem cathode separator 6b. Die Membran 1 wird nahe ihren Kanten durch zwei Verstärkungselemente (reinforcing member 10a, reinforcing member 10b) verstärkt, welche über die Anode 4a und die Kathode 4b überstehen.

In DE 102013215605 A1 wird ein Verfahren zum Herstellen einer Brennstoffzelle beschrieben. Figur 1 zeigt einen Stapel mit mehreren Brennstoffzellen. Der Stapel umfasst mehrere Bipolarplatten 1, mehrere Membran-Elektroden-Anordnungen 4 und mehrere Gasdiffusions-Schichten 2 und 3. Die Gasdiffusions-Schichten 2 und 3 führen in Bereichen 2b und 3b Reaktionsfluide zu und führen diese ab. Die Bipolarplatten 1 und die Membran-Elektroden-Anordnungen 4 stehen über die Gasdiffusions-Schichten 2 und 3 über, so dass mehrere Freiräume gebildet werden. Einige dieser Freiräume, nämlich die Bereiche 9, sollen abgedichtet werden, so dass kein Fluid sie durchdringen kann. Mit Hilfe von Düsen 6 lässt sich ein Dichtungsmaterial 5 in diese abzudichtenden Bereiche 9 einspritzen. Das eingespritzte Dichtungsmaterial 5 füllt die Bereiche 9 mindestens teilweise auf und dichtet die Schichten 2 und 3 nach außen ab.

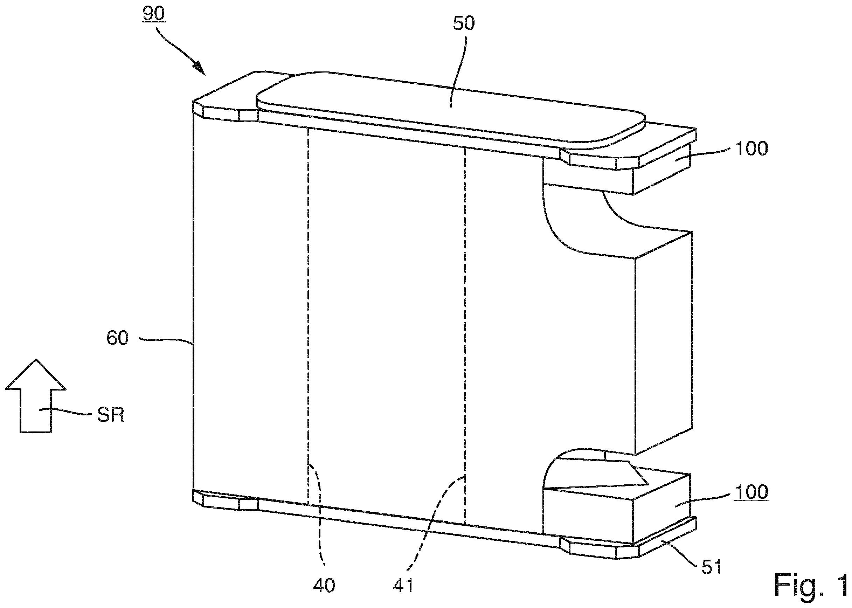

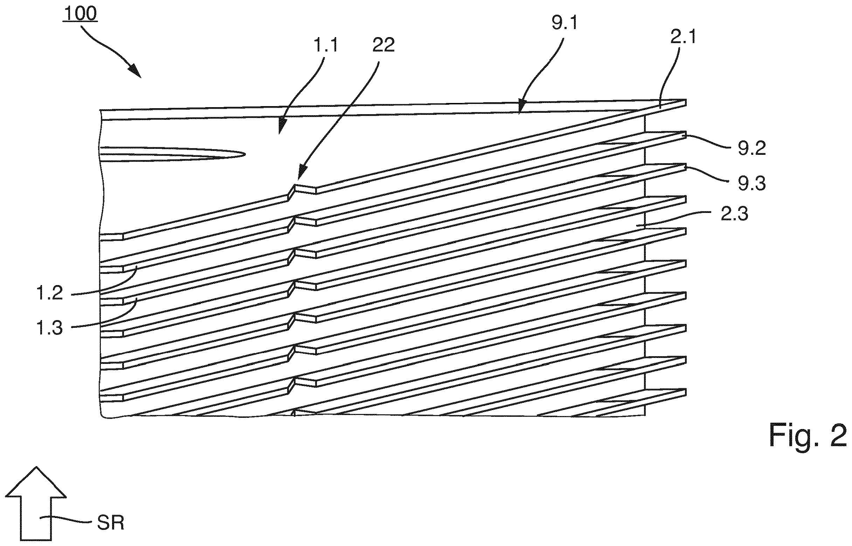

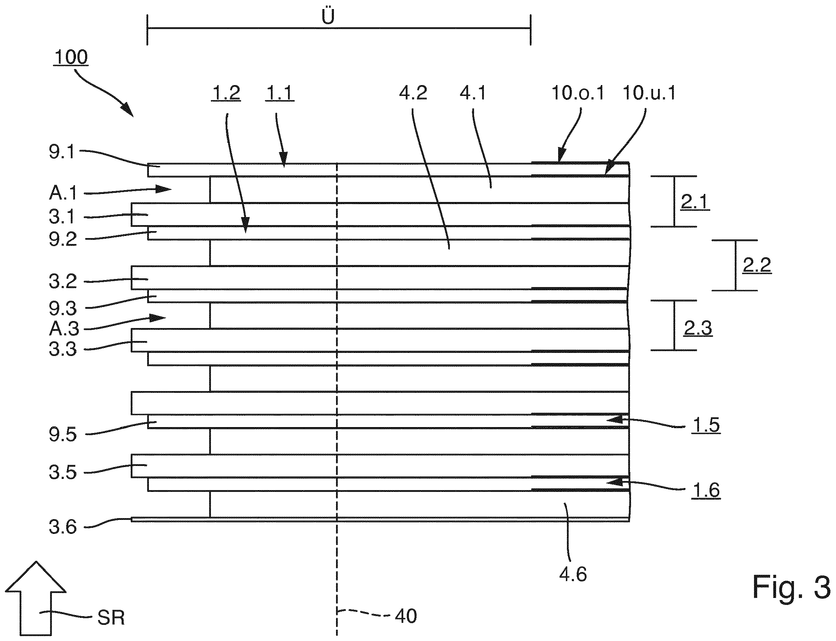

Figur 1 von DE 1020090169341 A1 zeigt eine einzelne Brennstoffzelle eines Stapels. Eine Membran-Elektroden-Anordnung 2 ist zwischen zwei Bipolarplatten 5 und 6 angeordnet und umfasst eine Kathode, eine Anode und eine Membran, die die Kathode von der Anode trennt. Die Membran-Elektroden-Anordnung 2 ist in einen Dichtrahmen 3 eingefügt, z.B. durch Einschweißen, und ist an einer Nut 4 ausgerichtet. Die Bipolarplatten 5 und 6 versorgen die Nute 4 mit einem Brennstoff und die Kathode mit einem Oxidationsmittel. Von jeder Bipolarplatte 5 und 6 stehen Rippen 7 ab, zwischen denen Kanäle für ein Reaktionsmittel gebildet werden. Der Dichtrahmen 3 und die die Bipolarplatten 5 und 6 kommen in einem Anlagebereich 10 mit einer Schräge 11 in Kontakt miteinander, vgl. Figur 2. Beim Herstellen werden die Platten 2, 5 und 6 in den Dichtrahmen 3 eingefügt und durch eine Kraft 14 zusammengepresst, vgl. Figur 3.

In DE 10151380 B4 werden mehrere Verfahren beschrieben, um eine Dichtung in einer Brennstoffzelle zu montieren. Eine Dichtung 10A in Form eines rechteckigen Rahmens trennt luftdicht Gasdurchgänge ab, die zwischen einem Membran-Elektroden-Aufbau 20 und einer nicht gezeigten Separatorplatte ausgebildet sind, vergleiche Figur 1A bis Figur 1E. Die Dichtung 10A und der Membran-Elektroden-Aufbau 20 werden zwischen zwei Pressformen 30 und 40 gehalten.

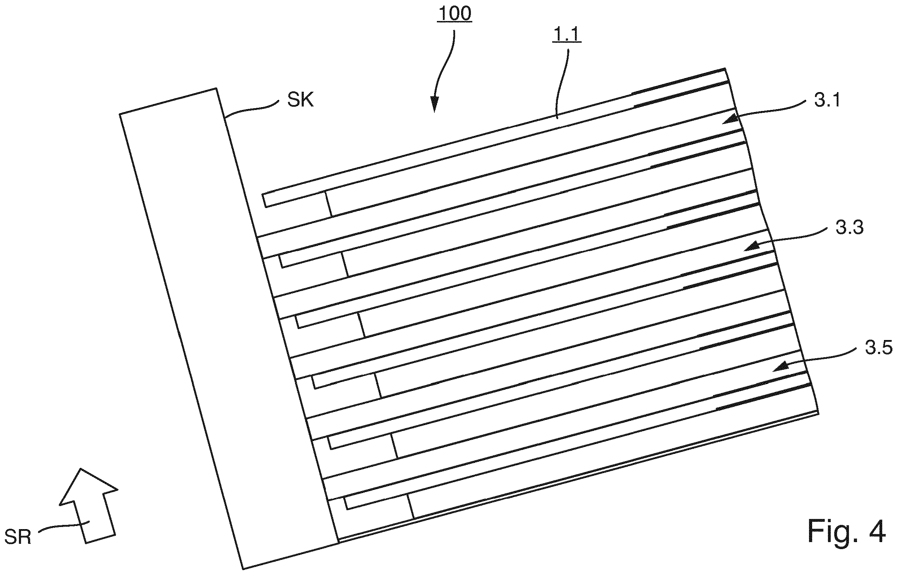

Figur 1 und Figur 3 von DE 102011051309 A1 zeigen im Querschnitt eine Membran-Elektroden-Einheit 1 für eine Brennstoffzelle. Die Membran-Elektroden-Einheit 1 umfasst eine Anode 2, eine Kathode 3 und ein Membran 4 zwischen der Anode 2 und der Kathode 3. Ein profilierter Dichtring 5 umgibt die Anode 2, die Kathode 3 und die Membran 4. Die Membran 4 steht in einem umlaufenden Bereich 6 über die Anode 2 und die Kathode 3 über. Dieser überstehende Bereich 6 dringt in den Dichtring 5 ein. In einen Dichtkörper 9 des Dichtringes 5 sind Kanäle 8 eingelassen, durch die ein Gas strömen kann. Am Dichtkörper 9 sind weiterhin umlaufende Dichtrippen 10 und 11 sowie querstehende Dichtrippen 12 angeordnet, vgl. Figur 2. Figur 4 zeigt eine Gießform 14 mit zwei Gießform-Hälften 15 und 16, die eine Negativform für die Membran-Elektroden-Einheit 1 bereitstellen. Die obere Hälfte 15 besitzt einen ein Spritzkanal 18 und einen Entlüftungskanal 19.

Figur 1 von DE 102013014083 A1 zeigt eine Membran-Elektroden-Einheit (MEA) 1 mit zwei Gasdiffusionselektroden 2 und 3 und eine Membran 4 zwischen den beiden Elektroden 2 und 3. Außerdem zeigt Figur 1 einen Dichtrahmen 12 mit drei noch nicht miteinander verbundenen Lagen 5, 6, 7. Ein zum Außenrand der MEA 1 hin offener Spalt 8 nimmt ein Dichtungsmaterial 9 auf. In einem Verfahrensschritt B wird diese Anordnung unter Hitzezufuhr zwischen zwei Pressplatten zusammengepresst. Hierbei schmilzt das Dichtungsmaterial 9 und 5 und dringt in den Spalt 8 sowie in einen Spalt d zwischen die MEA 1 und den Dichtrahmen 12 ein, vgl. Figur 2. Das flüssige Dichtmaterial 9 verschließt beiderseits der Membran 4 die offene Porenstruktur der Gasdiffusionselektroden 2 und 3.

Figur 1 von US 2015/0349355 A1 zeigt eine Batteriezelle 10 mit einer Elektrodenanordnung (membrane electrode assembly 12), einem Anoden-Separator (anode separator 14) und einem Kathoden-Separator (cathode separator 16). Eine erste Versiegelung (first sealing member 36) ist mit den Oberflächen 14a und 14b des Anoden-Separators 14 verbunden und umgibt den Anoden-Separator 14. Eine zweite Versiegelung (second sealing member 38) ist mit den Oberflächen 16a und 16b des Kathoden-Separators 16 verbunden und umgibt den Kathoden-Separator 16.

Figur 1 von EP 1652258 B1 zeigt eine Membran-Elektroden-Einheit zur Elektrolyse von Wasser. Eine ionenleitende Membran 1 hat eine Vorderseite (Kathodenseite) und eine Rückseite (Anodenseite). Zur Wasserstoffentwicklung ist auf die Kathodenseite eine erste Katalysatorschicht 2 aufgebracht. Zur Sauerstoffentwicklung ist eine zweite Katalysatorschicht 3 auf die Anodenseite aufgebracht. Ein erstes Gasverteiler-Substrat 4 grenzt an die erste Katalysatorschicht 2 an, ein zweites Gasverteiler-Substrat 5 an die zweite Katalysatorschicht 3. Das erste Gasverteiler-Substrat 4 ist kleiner als die Membran 1, das zweite Gasverteiler-Substrat 5 etwa genauso groß wie die Membran 1. Ein Dichtungsmaterial 7 umschließt die Membran-Elektroden-Einheit, vgl. Figur 2.

Aufgabe der Erfindung ist es, einen Brennstoffzellen-Stapel mit den Merkmalen des Oberbegriffs des Anspruchs 1 bereitzustellen, bei welchem die elektrische Isolierung zwischen zwei benachbarten Membran-Elektroden-Einheiten des Stapels verbessert wird und dadurch die Gefahr eines unerwünschten Stromflusses zwischen diesen Einheiten reduziert ist.

Gelöst wird diese Aufgabe durch einen Brennstoffzellen-Stapel mit den in Anspruch 1 angegebenen Merkmalen. Vorteilhafte Weiterbildungen ergeben sich aus den Unteransprüchen, der nachfolgenden Beschreibung sowie den Zeichnungen.

Der erfindungsgemäße Brennstoffzellen-Stapel umfasst eine Abfolge von plattenförmigen Elementen, wobei jedes Element der Abfolge entweder eine Membran-Elektroden-Einheit oder eine Bipolarplatte ist. Die Abfolge des Brennstoffzellen-Stapels erstreckt sich in eine Stapelrichtung.

Jede Membran-Elektroden-Einheit umfasst jeweils
- eine Kathode,
- eine Anode und
- eine Membran.

Die Membran ist zwischen der Kathode und der Anode einer Membran-Elektroden-Einheit angeordnet. Die Membran einer Membran-Elektroden-Einheit steht in der Ausdehnungs-Ebene sowohl über die Anode als auch über die Kathode dieser Membran-Elektroden-Einheit über.

Jede Bipolarplatte ist elektrisch leitend. Die Membran einer Membran-Elektroden-Einheit wirkt elektrisch isolierend und hat eine reduzierte elektrochemische Wechselwirkung mit einer angrenzenden Bipolarplatte - verglichen mit der Anode und der Kathode.

Die Biegesteifigkeit der Membran einer Membran-Elektroden-Einheit - oder wenigstens die des überstehenden Bereichs der Membran - ist geringer als die Biegesteifigkeit einer Bipolarplatte.

In der Abfolge, die aus den plattenförmigen Elementen besteht und zum Brennstoffzellen-Stapel gehört, befindet sich jede Membran-Elektroden-Einheit zwischen zwei Bipolarplatten. Die Anode und die Kathode sind mit jeweils einer angrenzenden Bipolarplatte elektrisch verbunden. Jede Membran-Elektroden-Einheit und jede Bipolarplatte erstreckt sich in jeweils einer Ausdehnungs-Ebene. Diese Ausdehnungs-Ebene steht senkrecht auf der Stapelrichtung. Die Ausdehnungs-Ebenen der plattenförmigen Elemente sind daher parallel zueinander.

Jede Bipolarplatte steht über die jeweilige Membran jeder angrenzenden Membran-Elektroden-Einheit über. Dieses Überstehen tritt in mindestens eine Betrachtungsrichtung, die in der Ausdehnungs-Ebene der Bipolarplatte liegt und damit senkrecht auf der Stapelrichtung steht, auf. In einer Ausgestaltung steht jede Bipolarplatte in jede Richtung in der Ausdehnungs-Ebene über die beiden Membrane der beiden angrenzenden Membran-Elektroden-Einheiten über.

Die überstehende Membran bewirkt eine elektrische Isolierung der Anode von der Kathode einer Membran-Elektroden-Einheit und eine Isolierung von Anode und Kathode gegenüber der Umgebung der Membran-Elektroden-Einheit. Insbesondere sind die Anode und die Kathode durch den überstehenden Bereich der Membran von einer in vielen Fällen verwendeten elektrisch leitenden Umhüllung des Brennstoffzellen-Stapels elektrisch isoliert.

Lösungsgemäß steht die Membran einer Membran-Elektroden-Einheit in der Ausdehnungs-Ebene dieser Membran-Elektroden-Einheit sowohl über die Anode also über die Kathode dieser Membran-Elektroden-Einheit über. Dadurch reduziert die überstehende Membran das Risiko, dass ein unerwünschter Stromfluss zwischen den beiden Bipolarplatten, die an diese Membran-Elektroden-Einheit angrenzen, oder zwischen der Anode und der Kathode der Membran-Elektroden-Einheit auftritt.

Außerdem lässt sich die Membran so auslegen, dass sie für Fluid schwer oder überhaupt nicht durchlässig ist, so dass ein unerwünschter Fluss von Fluid in die oder aus der Membran-Elektroden-Einheit in oder an den angrenzenden Bipolarplatten vorbei unterbunden wird.

Lösungsgemäß stehen die Bipolarplatten über die Membrane der Membran-Elektroden-Einheiten über und haben größere Biegesteifigkeiten als die überstehenden Bereiche dieser Membrane. Jede Membran-Elektroden-Einheit und damit jede Membran befindet sich zwischen zwei biegesteiferen und über die Membran-Elektroden-Einheit überstehenden Bipolarplatten. Umgekehrt befindet sich dadurch stets eine Bipolarplatte zwischen zwei in der Abfolge benachbarten Membran-Elektroden-Einheiten mit überstehenden Membranen - mit Ausnahme der ersten und der letzten Bipolarplatte der Abfolge. Jede überstehende Bipolarplatte mit größerer Biegesteifigkeit verhindert, dass die beiden benachbarten Membran-Elektroden-Einheiten miteinander in Kontakt kommen und dadurch ein unerwünschter Kurzschluss zwischen einer Anode und einer Kathode entsteht. Diese erwünschte Schutzwirkung tritt auch dann auf, wenn beim Aufschichten der Membran-Elektroden-Einheiten und der Bipolarplatten zu dem Brennstoffzellen-Stapel eine Membran-Elektroden-Einheit nicht genau in der gewünschten Position auf eine Bipolarplatte gelegt wird, sondern so, dass sie mit einem leichten seitlichen Versatz positioniert und / oder um eine Achse parallel zur Stapelrichtung verdreht ist. Dank der überstehenden Bipolarplatten mit größerer Biegesteifigkeit wird trotzdem die gewünschte elektrische Isolierung zwischen den Membran-Elektroden-Einheiten gewährleistet.

Üblicherweise wird der Brennstoffzellen-Stapel dadurch hergestellt, dass die Membran-Elektroden-Einheiten und die Bipolarplatten getrennt voneinander hergestellt werden und dann in die Stapelrichtung aufeinander aufgeschichtet und gestapelt werden. Hierbei werden immer abwechselnd eine Membran-Elektroden-Einheit und eine Bipolarplatte auf den bereits gebildeten Stapel gelegt. Weil lösungsgemäß die Bipolarplatten höhere Biegesteifigkeiten aufweisen und über die Membran-Elektroden-Einheiten mit den biegeschlafferen Membrane überstehen, ist es möglich, beim Aufstapeln die überstehenden Bipolarplatten an einer starren Stapelkante aufzurichten. Diese Stapelkante erstreckt sich parallel zur Stapelrichtung. Ein solches Ausrichten an einer Stapelkante wäre mit überstehenden biegeschlafferen Membranen von Membran-Elektroden-Einheiten überhaupt nicht oder nur erschwert möglich. Diese starre Stapelkante kann so angeordnet sein, dass sie einen Winkel zur Vertikalen aufweist und so positioniert ist, dass die Schwerkraft die Bipolarplatten schräg abwärts zur Stapelkante hin verschiebt. Die überstehenden Bipolarplatten verhindern, dass eine biegeschlaffere Membran in Kontakt mit der Stapelkante kommt und umgebogen wird oder entlang der Stapelkante reibt, und zwar insbesondere dann, wenn der Stapel in die Stapelrichtung zusammengedrückt wird. Vielmehr bleibt die Membran in einem Abstand zur Stapelkante und berührt die Stapelkante nicht. Möglich, aber dank der Erfindung nicht erforderlich ist es, in die überstehende Membran jeder Membran-Elektroden-Einheit eine Nut einzulassen, um die Membran-Elektroden-Einheiten beim Herstellen des Brennstoffzellen-Stapels auszurichten. Dank der Stapelkante sind größere Toleranzen beim Herstellen des Stapels und insbesondere beim Positionieren der plattenförmigen Elemente möglich.

Das Merkmal, dass die Bipolarplatten mit der höheren Biegesteifigkeit über die Membran-Elektroden-Einheiten mit den Membranen geringerer Biegesteifigkeit überstehen, erleichtert es außerdem, den Brennstoffzellen-Stapel elektrisch zu kontaktieren. Insbesondere wird es erleichtert, mindestens einen starren Stromleiter in eine Richtung parallel zur Stapelrichtung und / oder senkrecht zu den Ausdehnungs-Ebenen in Kontakt mit den Bipolarplatten zu bringen. Diesen elektrischen Kontakt herzustellen wäre deutlich schwieriger, wenn überstehende plattenförmige Bestandteile mit einer geringen Biegesteifigkeit elektrisch kontaktiert werden müssten. Nicht erforderlich ist es insbesondere, dass dieser Stromleiter in der Ausdehnungs-Ebene entlang der überstehenden Membrane geführt wird, um in Kontakt mit den Anoden oder Kathoden der Membran-Elektroden-Einheiten zu kommen. Dank der höheren Biegesteifigkeit lässt sich ein starrer Stromleiter gegen die überstehenden Bipolarplatten pressen, beispielsweise mit Hilfe von Federelementen, ohne dass die Bipolarplatten ausweichen können. Bei Bedarf lässt sich die Verbindung zwischen dem Stromleiter und dem Brennstoffzellen-Stapel leichter wieder lösen.

Jede Membran-Elektroden-Einheit ist vorzugsweise rechteckig, hat also vier Außenkanten in der Ausdehnungs-Ebene, wobei die Außenkanten senkrecht auf die Stapelrichtung stehen. In einer bevorzugten Ausgestaltung umgibt die Membran sowohl die Kathode als auch die Anode von allen Seiten und steht nach allen Seiten über. Der überstehende Bereich der Membran hat also die Form eines rechteckigen geschlossenen Streifens, der um die Kathode und die Anode herum gelegt ist. Andere geometrische Formen für die Anode, die Kathode und den überstehenden Bereich der Membran sind ebenfalls möglich. Vorzugsweise hat auch jede Bipolarplatte vier Außenkanten, die in der Ausdehnungs-Ebene liegen, und ist bevorzugt rechteckig.

In einer Ausgestaltung umfasst jede Bipolarplatte eine plattenförmige kleinere Komponente und eine plattenförmige größere Komponente. Im Brennstoffzellen-Stapel erstrecken sich diese beiden Komponenten in zwei zueinander parallelen Ausdehnungs-Ebenen, die senkrecht auf der Stapelrichtung stehen. Die kleinere Komponente liegt bevorzugt flächig an der größeren Komponente an. Möglich ist, dass die kleinere Komponente elektrisch gegen die größere Komponente isoliert ist. Vorzugsweise sind diese beiden Komponenten einer Bipolarplatte starr miteinander verbunden. In der Abfolge des Brennstoffzellen-Stapels liegt jede Membran-Elektroden-Einheit zwischen einer kleineren Komponente einer Bipolarplatte und einer größeren Komponente der nächsten Bipolarplatte. Somit ist entweder die Anode der Membran-Elektroden-Einheit mit einer kleineren Komponente verbunden und die Kathode mit einer größeren Komponente oder umgekehrt die Anode mit einer größeren Komponente und die Kathode mit einer kleineren Komponente. Mindestens die größere Komponente steht in mindestens eine Richtung, bevorzugt in jede Richtung, in der Ausdehnungs-Ebene sowohl über die kleinere Komponente als auch über die Membran der oder jeder angrenzenden Membran-Elektroden-Einheit über. Vorzugsweise sind sowohl die kleinere Komponente als auch die größere Komponente jeweils rechteckig.

Die Ausgestaltung mit der größeren und der kleineren Komponente ermöglicht es, die größeren Komponenten getrennt von den kleineren Komponenten herzustellen, insbesondere an unterschiedlichen Orten und / oder mit verschiedenen Fertigungsanlagen oder Herstellungsverfahren. Dies erleichtert es, die beiden Komponenten einer Bipolarplatte an die jeweiligen möglicherweise differierenden Anforderungen anzupassen. Diese Anforderungen resultieren daraus, dass die eine Komponente einer Bipolarplatte eine Anode und die andere Komponente eine Kathode einer Membran-Elektroden-Einheit kontaktiert. Möglich ist daher, dass eine kleinere Komponente andere Anforderungen als eine größere Komponente zu erfüllen hat.

Vorzugsweise werden die beiden Komponenten zu einer Bipolarplatte zusammengefügt und starr miteinander verbunden, so dass eine Vielzahl von Bipolarplatte mit jeweils einer kleineren und einer größeren Komponente erzeugt wird. Anschließend werden die durch Zusammenfügen erzeugten Bipolarplatten und die Membran-Elektroden-Einheiten zum Brennstoffzellen-Stapel aufgestapelt. Möglich ist, die größeren Komponenten getrennt von den kleineren Komponenten herzustellen und dann beide zu dem Ort zu transportieren, an dem die Membran-Elektroden-Einheiten und die Bipolarplatten zum Brennstoffzellen-Stapel aufgestapelt werden sollen, und dort die größeren und die kleineren Komponenten zu den Bipolarplatten zusammenzufügen. Möglich ist auch, an einem Ort die Bipolarplatten durch Zusammenfügen der beiden Komponenten zu erzeugen und an einem anderen Ort die Bipolarplatten und die Membran-Elektroden-Einheiten zum Brennstoffzellen-Stapel aufzustapeln.

In einer Ausgestaltung hat sowohl jede größere Komponente als jede kleinere Komponente eine Ausdehnung in die Stapelrichtung, die größer ist als die Ausdehnung einer Membran-Elektroden-Einheit in die Stapelrichtung. Dadurch haben größere Bereiche des Brennstoffzellen-Stapels die größeren Biegesteifigkeiten. Mit anderen Worten: Sowohl jede größere Komponente als jede kleinere Komponente ist dicker als jede Membran-Elektroden-Einheit. In einer Ausgestaltung hat jede kleinere Komponente die gleiche Ausdehnung in die Stapelrichtung (gleiche Dicke) und / oder die gleiche Biegesteifigkeit wie jede größere Komponente.

In einer Ausführungsform steht jede Membran-Elektroden-Einheit in jede Richtung, die senkrecht auf der Stapelrichtung steht, über die angrenzende kleinere Komponente über. Die angrenzende größere Komponente steht also über die Membran-Elektroden-Einheit über und diese Membran-Elektroden-Einheit wiederum über die angrenzende kleinere Komponente. Dadurch wird jeweils eine Aussparung zwischen der Membran-Elektroden-Einheit und einer in der Abfolge angrenzenden und zur Membran-Elektroden-Einheit beabstandeten größeren Komponente gebildet. Diese Aussparung umgibt bevorzugt die gesamte Umfangsfläche derjenigen kleineren Komponente, die sich zwischen der Membran-Elektroden-Einheit und der größeren Komponente befindet. Vorzugsweise steht wiederum jede kleinere Komponente in jeder Richtung in der Ausdehnungs-Ebene über die angrenzende oder benachbarte Anode und / oder Kathode über. Dadurch trägt auch die kleinere Komponente dazu bei, einen unerwünschten Stromfluss zu verhindern. Zwischen der Anode und Kathode einerseits und der Aussparung andererseits tritt ein Abstand auf.

In einer Ausgestaltung befindet sich kein Teil innerhalb dieser Aussparung zwischen einer Membran-Elektroden-Einheit und einer größeren Komponente, und die umgehende Luft oder ein sonstiges Fluid kann in eine Richtung senkrecht oder schräg zur Stapelrichtung durch diese Aussparung fließen. Diese Ausgestaltung erleichtert es, mit Hilfe der Umgebungsluft oder eines Fluid-Strahls den Brennstoffzellen-Stapel zu kühlen und Fluide zuzuführen oder Fluide, die aus dem Brennstoffzellen-Stapel während des Betriebs austreten, abzuführen. Möglich ist auch, mindestens einen Schlauch in diese Aussparung zu legen und diesen Schlauch dafür zu verwenden, ein Fluid zum Brennstoffzellen-Stapel zu führen oder ein austretendes Fluid abzuführen.

In einer anderen Ausgestaltung ist mindestens eine Abdichtung in dieser Aussparung angeordnet. Vorzugsweise umgibt diese Abdichtung die gesamte Umfangsfläche der kleineren Komponente, welche sich im Innenbereich in dieser Aussparung befindet. Vorzugsweise wirkt diese Abdichtung elektrisch isolierend und reduziert dadurch weiterhin die Gefahr, dass eine Membran-Elektroden-Einheit in unerwünschter Weise in Kontakt mit einer angrenzenden Membran-Elektroden-Einheit gerät. Vorzugsweise verhindert die Abdichtung weiterhin, dass eine über die kleinere Komponente überstehende Membran einer Membran-Elektroden-Einheit in Kontakt mit einer benachbarten und beabstandeten größeren Komponente einer Bipolarplatte kommt. Oft ist nämlich gewünscht, dass nur die eine Oberfläche der Membran-Elektroden-Einheit in Kontakt mit einer größeren Komponente kommt, aber nicht die andere Oberfläche.

In einer Ausgestaltung ist die Ausdehnung in die Stapelrichtung der Abdichtung in der Aussparung mindestens so groß wie die Ausdehnung der Aussparung in die Stapelrichtung, also mindestens so groß wie der Abstand zwischen der Membran-Elektroden-Einheit und der größeren Komponente. Vorzugsweise ist die Abdichtung verformbaren und wird in die Stapelrichtung zusammengepresst, wenn der Stapel zusammengepresst wird. Diese Ausgestaltung mit der Abdichtung größer als der Aussparung ermöglicht es, dass eine Membran-Elektroden-Einheit auch dann in Position gehalten wird und ihre plattenförmige Gestalt beibehält, wenn die Membran der Membran-Elektroden-Einheit oder sogar die gesamte Membran-Elektroden-Einheit biegeschlaff ist und von unten durch eine kleinere Komponente gestützt wird. Außerdem stützen die Abdichtungen die Bipolarplatten ab und verhindern insbesondere, dass eine biegesteife Bipolarplatte bricht, z.B. wenn die überstehenden Bipolarplatten an einer starren Stapelkante anliegen und der Stapel in die Stapelrichtung zusammengedrückt wird, so dass wenigstens einige Bipolarplatte in die Stapelrichtung entlang der Stapelkante verschoben werden. Darüber hinaus wird die elektrische Isolierung zwischen zwei benachbarten plattenförmigen Elementen weiter verbessert. Die Abdichtung verhindert weiterhin, dass ein Fluid zu der oder von der kleineren Komponente fließt.

In einer Ausführungsform stehen die größeren Komponenten der Bipolarplatten auch über die Abdichtungen in den Aussparungen über. Diese Ausgestaltung erleichtert es, beim Herstellen des Brennstoffzellen-Stapels die Bipolarplatten an einer Stapelkante auszurichten, und zwar auch dann, wenn die Abdichtungen elastisch und die Membran oder die gesamten Membran-Elektroden-Einheiten biegeschlaff sind. Die Abdichtungen kommen nicht in Kontakt mit einer starren Stapelkante.

In einer anderen Ausführungsform bilden die größeren Komponenten und die Abdichtungen in den Aussparungen in wenigstens eine Richtung, die parallel zur Stapelrichtung ist, eine durchgehende Kante. Die größeren Komponenten und die Abdichtungen werden an dieser Kante ausgerichtet. Diese Ausgestaltung macht es besonders leicht, beim Aufstapeln der Membran-Elektroden-Einheiten und Bipolarplatten zum Batteriezellen-Stapel die Bestandteile an einer starren Stapelkante aufzurichten, und zwar auch dann, wenn die Membrane der Membran-Elektroden-Einheiten biegeschlaff und die Abdichtungen verformbar sind. Darüber hinaus reduziert die durchgehende Kante mit den biegesteiferen Bipolarplatten und den verformbaren Abdichtungen weiter die Gefahr, dass eine Bipolarplatte bricht, wenn der Stapel gebildet und anschließend zusammengedrückt wird. Diese Vorteile werden insbesondere dann erzielt, wenn die Abdichtungen vorab an die Membran-Elektroden-Einheiten befestigt worden sind und bei der Herstellung des Stapels jede Membran-Elektroden-Einheit mitsamt einer Abdichtung auf eine Bipolarplatte gestapelt wird. Wenn die Abdichtungen verformbar sind, lässt sich der Stapel auch dann an der Stapelkante ausrichten, wenn eine Abdichtung geringfügig über eine Bipolarplatte übersteht.

In einer Ausgestaltung umfasst jede Membran-Elektroden-Einheit zwei Oberflächen, die sich parallel zur Ausdehnungs-Ebene der Membran-Elektroden-Einheit erstrecken. Jede Oberfläche umfasst einen Wechselwirkungs-Bereich, der zur Anode bzw. Kathode gehört und in dem diese Oberfläche mit der jeweils angrenzenden Bipolarplatte in elektrochemischer Wechselwirkung tritt. Die Membran steht über die beiden Wechselwirkungs-Bereiche über und tritt nur in eine reduzierte elektro-chemische Wechselwirkung mit einer angrenzenden Bipolarplatte. Diese Membran hat lösungsgemäß eine geringere Biegesteifigkeit als die beiden angrenzenden Bipolarplatten. Vorzugsweise steht diese Membran in mindestens eine Richtung über die kleinere Komponente einer angrenzenden Bipolarplatte über, während die größere Komponente in diese Richtung über die Membran übersteht oder bündig mit der Membran abschließt. Dadurch tritt ein Abstand zwischen einem Wechselwirkungs-Bereich und der an diesen Wechselwirkungs-Bereich angrenzenden Bipolarplatte auf. Die Membran verbessert die elektrische Isolierung zwischen dem Wechselwirkungs-Bereich und der oder jeder angrenzenden Bipolarplatte.

In einer Ausgestaltung ist jede Bipolarplatte aus mindestens einem metallischen Material oder einem ausreichend starken Kunststoff, z.B. aus einem glasfaserverstärktem Kunststoff, hergestellt. Die gesamte Membran kann aus demselben Material hergestellt. Oder der Bereich zwischen der Anode und der Kathode ist aus einem ersten Material hergestellt und der über die Kathode überstehende Bereich der Membran aus einem zweiten Material.

Das Material der Abdichtungen kann das gleiche sein wie das oder ein Material der Membrane der Membran-Elektroden-Einheiten oder kann vom Material der Membrane abweichen. Bei abweichenden Material wird ermöglicht, das oder jedes für die Abdichtungen verwendete Material an die Anforderungen bei der Herstellung und beim Einsatz des Brennstoffzellen-Stapels anzupassen, insbesondere daran, ob reiner Sauerstoff oder Umgebungsluft oder ein sonstiges geeignete Gas als Oxidationsmittel für die Stromerzeugung verwendet wird.

In einer Ausgestaltung ist zwischen einer Membran-Elektroden-Einheit und einer angrenzenden kleineren Komponente und / oder einer angrenzenden größeren Komponente jeweils eine Diffusions-Schicht angeordnet. Die Abdichtung, die um diese kleinere Komponente herum geführt ist, verhindert in einer Ausgestaltung einen Fluid-Fluss von außen zur Diffusions-Schicht und oder den Austritt von Fluid aus dieser Diffusions-Schicht.

Unterschiedliche Ausgestaltungen, um den Batteriezellen-Stapel herzustellen und mit den Abdichtungen zu versehen, sind möglich.

In einer Ausführungsform wird an jede Membran-Elektroden-Einheit eine Abdichtung befestigt, und die Membran-Elektroden-Einheiten mit den befestigten Abdichtungen und die Bipolarplatten werden zum Batteriezellen-Stapel aufgeschichtet. In einer Ausgestaltung werden die Membran-Elektroden-Einheiten und die Abdichtungen getrennt voneinander hergestellt. Anschließend wird jeweils eine Abdichtung an die Membran einer Membran-Elektroden-Einheit befestigt, z.B. durch Ankleben oder mittels Erhitzen. In einer anderen Ausgestaltung bildet die Membran und die Abdichtung ein einziges Bauteil, welches vorzugsweise dadurch hergestellt wird, dass eine flüssige Masse in eine Form gegossen wird, dort erkaltet und erstarrt und dann eine Membran mit daran befestigter Abdichtung bildet.

Insbesondere dann, wenn die umlaufende Abdichtung die gesamte Umfangsfläche einer kleineren Komponente umgibt, erleichtert die Ausgestaltung, dass die Abdichtung vorab an die Membran-Elektroden-Einheit befestigt ist, den Vorgang, die plattenförmigen Elemente aufeinander zu stapeln und jedes plattenförmige Element mit einer nur geringen Abweichung von einer gewünschten Position auf den bereits gebildeten Stapel zu platzieren. Dies gilt sowohl dann, wenn eine Membran-Elektroden-Einheit mit einer nach unten zeigenden und vorab befestigten Abdichtung auf den jeweils bereits gebildeten Stapel mit einer nach oben zeigenden kleineren Komponente als dem obersten Element gelegt wird, als auch dann, wenn eine Bipolarplatte mit einer nach unten zeigenden kleineren Komponente auf den jeweils bereits gebildeten Stapel mit einer Membran-Elektroden-Einheit mit nach oben zeigender und vorab befestigter Abdichtung als dem obersten Element gelegt wird.

In einer anderen Ausgestaltung werden zunächst die Membran-Elektroden-Einheiten und die Bipolarplatten zu einem Batteriezellen-Stapel ohne Abdichtungen aufgestapelt, so dass die zunächst leeren Aussparungen um die kleineren Komponenten herum gebildet werden. Vorzugsweise werden beim Aufstapeln die starreren Bipolarplatten an einer starren Stapelkante ausgerichtet. Anschließend werden die Abdichtungen in die Aussparungen eingefügt. Möglich ist, dass die Abdichtungen getrennt vom Batteriezellen-Stapel gefertigt und bei Bedarf geprüft werden und beispielsweise die Form von O-Ringen aus Gummi oder aus einem anderen elastischen Material haben. Die vorab gefertigten verformbaren Abdichtungen werden in die Aussparungen des bereits gebildeten Batteriezellen-Stapels eingefügt. Möglich ist auch, dass eine flüssige Dichtungsmasse in die Aussparungen des erzeugten Stapels eingefügt wird, z.B. per Spritzgießen, und anschließend abkühlt und dadurch erstarrt. Die erstarrte Dichtungsmasse bildet die Abdichtungen. Die Ausgestaltung mit flüssiger Dichtungsmasse erleichtert es, die Abdichtungen an die Form der Aussparungen anzupassen und leichte Ungenauigkeiten beim Aufstapeln auszugleichen.

Vorzugsweise gehört der lösungsgemäße Brennstoffzellen-Stapel zu einer Brennstoffzellen-Anordnung. Diese Brennstoffzellen-Anordnung umfasst weiterhin eine Umhüllung, die um den Brennstoffzellen-Stapel herum gelegt ist und elektrisch leitend sein kann. Diese Umhüllung kann eine seitliche Ummantelung sowie eine Bodenplatte und eine Deckplatte umfassen. Die Brennstoffzellen-Anordnung umfasst bevorzugt weiterhin mindestens einen Stromleiter. Der oder jeder Stromleiter erstreckt sich in eine Richtung parallel oder schräg zur Stapelrichtung. Der oder jeder Stromleiter kontaktiert elektrisch die überstehenden Bipolarplatten und befindet sich zwischen dem Brennstoffzellenstapel und der Umhüllung, bevorzugt innerhalb der Ummantelung. Auf diese Weise schützt die umgebende Ummantelung den Brennstoffzellen-Stapel und auch den oder jeden Stromleiter. Dank der Membrane, die in jeder Richtung über die Anoden und die Kathoden übersteht, kann die Ummantelung elektrisch leitend sein, insbesondere aus einem Metall hergestellt sein.

In einer Ausgestaltung gehört der lösungsgemäße Brennstoffzellen-Stapel zu einem Fahrzeug, insbesondere einem Landfahrzeug oder einem Wasserfahrzeug, welches weiterhin einen Elektromotor aufweist. Der Brennstoffzellen-Stapel liefert elektrische Energie, welche den Elektromotor antreibt.

Nachfolgend ist der erfindungsgemäße Brennstoffzellen-Stapel anhand eines in den Zeichnungen dargestellten Ausführungsbeispiels näher erläutert. Hierbei zeigen
Fig. 1 in perspektivischer Darstellung eine Brennstoffzellen-Anordnung mit einem Brennstoffzellen-Stapel in einer Umhüllung;
Fig. 2 einen Ausschnitt aus einem nicht lösungsgemäßen Brennstoffzellen-Stapel;
Fig. 3 in einer Querschnittsdarstellung einen Ausschnitt aus einem lösungsgemäßen Brennstoffzellen-Stapel in einer Ausführungsform ohne zusätzliche Abdichtungen;
Fig. 4 beispielhaft, wie die verschiedenen Bestandteile zu einem Brennstoffzellen-Stapel aufgeschichtet werden und die größeren Komponenten hierbei an einer starren Stapelkante ausgerichtet werden;
Fig. 5 schematisch eine Nut an einer Ecke der Bodenplatte, wobei die Nut zum Ausrichten des Stapels verwendet wird;
Fig. 6 schematisch eine ebenfalls zum Ausrichten verwendete Nut an der Bodenplatte von Fig. 5, wobei die Nut einen Abstand zur Ecke aufweist;
Fig. 7 in einer Seitendarstellung einen Ausschnitt aus einem lösungsgemäßen Brennstoffzellen-Stapel in einer Ausführungsform mit zusätzlichen Abdichtungen, die die gesamten Aussparungen ausfüllen;
Fig. 8 in eine Betrachtungsrichtung schräg von oben den Ausschnitt von Fig. 7;
Fig. 9 in einer Querschnittsdarstellung den Ausschnitt von Fig. 7;
Fig. 10 in einer Querschnittsdarstellung einen Ausschnitt aus einem lösungsgemäßen Brennstoffzellen-Stapel in einer Ausführungsform mit wulstförmigen Abdichtungen, die nur einen Teil der Aussparungen einnehmen.

Fig. 1 zeigt in perspektivischer Darstellung eine Brennstoffzellen-Anordnung 90 mit einem Brennstoffzellen-Stapel 100. Der Brennstoffzellen-Stapel 100 erstreckt sich in eine Stapelrichtung SR und umfasst eine Abfolge von annähernd rechteckigen plattenförmigen Elementen, vorzugsweise mehrere Hundert plattenförmige Elemente. Jeweils einige obere plattenförmige Elemente und einige untere plattenförmige Elemente des Brennstoffzellen-Stapels 100 sind in Fig. 1 gezeigt, während plattenförmige Elemente in der Mitte fortgelassen sind.

Jedes plattenförmige Element erstreckt sich in einer Ausdehnungs-Ebene, die senkrecht auf der Stapelrichtung SR steht. Diese Ausdehnungs-Ebenen sind somit alle parallel zueinander. Jede gedachte Ausdehnungs-Ebene bildet die Mittelebene des plattenförmigen Elements, d. h. die Ausdehnungs-Ebene liegt in der Mitte zwischen den beiden Oberflächen des plattenförmigen Elements. Vorzugsweise hat jedes plattenförmige Element eine Länge, also maximale Ausdehnung in der Ausdehnungs-Ebene, die viermal bis achtmal so groß ist wie die Breite, also die Ausdehnung senkrecht zur Länge in der Ausdehnungs-Ebene. Die Breite ist mindestens fünfmal, bevorzugt zehnmal, so groß wie die Dicke, also die Ausdehnung in die Stapelrichtung SR.

Eine Deckplatte 50 befindet sich oberhalb des Brennstoffzellen-Stapels 100 und hat vorzugsweise die Form einer Platte aus Stahl oder einem anderen Metall. Vorzugsweise sind zwei elektrische Pole (Terminals) in die Deckplatte 50 eingelassen. Eine Bodenplatte 51, vorzugsweise ebenfalls in Form einer Metallplatte, befindet sich unterhalb des Brennstoffzellen-Stapels 100. Der Brennstoffzellen-Stapel 100 erstreckt sich also zwischen der Deckplatte 50 und der Bodenplatte 51. Eine seitliche Ummantelung 60 umgibt von allen vier Seiten den Brennstoffzellen-Stapel 100 und ist mit beiden Platten 50 und 51 fest verbunden. Die seitliche Ummantelung 60 ist vorzugsweise aus einem elektrisch leitenden Material, z.B. aus Aluminium, gefertigt. Durch die Platten 50 und 51 und die Ummantelung 60 wird der Brennstoffzellen-Stapel 100 in die Stapelrichtung SR zusammengepresst und in dieser zusammengepressten Situation gehalten.

Fig. 1 zeigt weiterhin zwei längliche Stromschienen 40 und 41, die sich parallel zur Stapelrichtung SR erstrecken und zwischen der Ummantelung 60 und dem Brennstoffzellen-Stapel 100 angeordnet sind. Zwei weitere längliche Stromschienen (nicht gezeigt) befinden sich - gesehen in der Betrachtungsrichtung von Fig. 1 - hinter dem Brennstoffzellen-Stapel 100 und ebenfalls innerhalb der Ummantelung 60. An diesen Stromschienen 40, 41, ... lässt sich die generierte elektrische Spannung abgreifen.

Zur Brennstoffzellen-Anordnung 90 des Ausführungsbeispiels gehören also der Brennstoffzellen-Stapel 100, die seitliche Ummantelung 60, die beiden Platten 50, 51, die nicht gezeigten Pole sowie die Stromschienen 40, 41 und weitere nicht gezeigte Stromschienen.

Fig. 2 zeigt einen Brennstoffzellen-Stapel 100, der nicht lösungsgemäß ausgestaltet ist und daher einige Vorteile der Erfindung nicht erzielt. Der Brennstoffzellen-Stapel 100 von Fig. 2 umfasst - genauso wie ein lösungsgemäßer Brennstoffzellen-Stapel 100 - zwei Arten von rechteckigen plattenförmigen Elementen, die sich in jeweils eine Ausdehnungs-Ebene erstrecken: einerseits Membran-Elektroden-Einheiten 1.1, 1.2, ... und andererseits Bipolarplatten 2.1, 2.2, ... Jede Membran-Elektroden-Einheit 1.1, 1.2, ... umfasst eine Kathode, eine Anode und eine biegeschlaffe Membran 9.1, 9.2, .... Die Membran 9.1, 9.2, ... befindet sich zwischen der Kathode und der Anode und ist für Elektroden durchlässig, aber nicht für ein Fluid, dass beim Betrieb des Stapels 100 zugeführt oder erzeugt wird. Die Membran 9.1, 9.2, .... steht in jede Richtung in der Ausdehnungs-Ebene sowohl über die Anode als auch über die Kathode über. Zwischen der Anode und der Membran 9.1, 9.2, .... sowie zwischen der Kathode und der Membran 9.1, 9.2, .... kann jeweils eine Katalysator-Schicht angeordnet sein. In jede Membran-Elektroden-Einheit 1.1, 1.2, ... ist mindestens eine Aussparung eingelassen, so dass die Aussparungen der übereinanderliegenden Membran-Elektroden-Einheiten 1.1, 1.2, ... einen durchgehenden Kanal bilden. In der Ausführungsform von Fig. 2 ist in mindestens eine Kante einer Membran 9.1, 9.2, .... einer Membran-Elektroden-Einheit 1.1, 1.2, ... eine Nut 22 eingelassen. Mit Hilfe dieser Nute 22 werden die Membran-Elektroden-Einheiten 1.1, 1.2, ... beim Herstellen des Brennstoffzellen-Stapels 100 ausgerichtet. Damit dieses Ausrichten gelingt, müssen die Nute 22 gesehen in die Stapelrichtung SR genau ausgerichtet sein.

Jede Bipolarplatte 2.1, 2.2, ... vermag elektrischen Strom sowie verschiedene Arten von Fluide zu leiten. Zu diesen Fluiden gehören beispielsweise Wasserstoff und Sauerstoff oder Luft sowie das erzeugte Wasser. In der Ausgestaltung von Fig. 2 stehen die Membrane 9.1, 9.2, ... der Membran-Elektroden-Einheiten 1.1, 1.2, ... über die Bipolarplatten 2.1, 2.2, ... über, und zwar in jede Richtung, die senkrecht auf die Stapelrichtung SR steht. Auch die Brennstoffzellen-Stapel 100 der lösungsgemäßen Ausführungsbeispiele haben diese beiden Arten von plattenförmigen Elementen.

Im Ausführungsbeispiel zeigt die Stapelrichtung SR senkrecht oder schräg nach oben. Die Anoden bilden die oberen Oberflächen der Membran-Elektroden-Einheiten 1.1, 1.2, ... und die Kathoden deren untere Oberflächen. Die Bezeichnungen "oben" und "unten" haben die üblichen Bedeutungen. Eine umgekehrte Ausgestaltung ist genauso möglich, also dass die Anoden die untere Oberflächen und die Kathoden die oberen Oberflächen bilden.

Zu vermeiden ist, dass die Anode einer Membran-Elektroden-Einheit 1.1, 1.2, ... mit der Kathode einer benachbarten Membran-Elektroden-Einheit 1.1, 1.2, ... in Kontakt kommt. Dadurch könnten unerwünschte elektrische Ströme und sogar ein Kurzschluss erzeugt werden. Die überstehenden Membrane 9.1, 9.2, ... der Membran-Elektroden-Einheiten 1.1, 1.2, ... haben eine geringe Biegesteifigkeit und lassen sich als biegeschlaffe Bestandteile bezeichnen. Sie sind beispielsweise gummiartig oder gellertartig. Möglich ist sogar, dass jede Membran-Elektroden-Einheit 1.1, 1.2, ... als Ganzes biegeschlaff ist. In der Ausgestaltung von Fig. 2 ist daher die Gefahr relativ groß, dass ein solcher unerwünschter elektrischer Kontakt auftritt. Die Bipolarplatten 2.1, 2.2, ... haben eine deutlich höhere Biegesteifigkeit als die Membrane 9.1, 9.2, ... der Membran-Elektroden-Einheiten 1.1, 1.2, .... Die Erfindung reduziert signifikant die Gefahr eines solchen unerwünschten elektrischen Kontakts.

In Fig. 3 wird in einer Querschnittsdarstellung eine erste Ausführungsform eines lösungsgemäßen Brennstoffzellen-Stapels 100 gezeigt. Die Betrachtungsrichtung ist parallel zu zwei Außenkanten der rechteckigen plattenförmigen Elemente und steht senkrecht auf den beiden anderen Außenkanten sowie die Stapelrichtung SR.

Genauso wie in Fig. 2 umfasst auch jede Membran-Elektroden-Einheit 1.1, 1.2, ... der ersten Ausführungsform jeweils eine Anode, eine Kathode, eine biegeschlaffe Membran 9.1, 9.2, ... zwischen der Anode und der Kathode und optional zwei Katalysator-Schichten. In Fig. 3 wird der überstehende Bereich Ü gezeigt, in dem die Membran 9.1, 9.2, ... sowohl über die Anode als auch über die Kathode übersteht.

Jede Bipolarplatte 2.1, 2.2, ... umfasst im Ausführungsbeispiel jeweils eine kleinere Komponente 4.1, 4.2, ... und eine größere Komponente 3.1, 3.2, ... unter der kleineren Komponente 4.1, 4.2, .... Diese beiden Komponenten 3.1, 3.2, ... und 4.1, 4.2, ... sind plattenförmig und erstrecken sich in jeweils einer Ebene, die senkrecht auf der Stapelrichtung SR steht. Die kleinere Komponente 4.1, 4.2, ... einer Bipolarplatte 2.1, 2.2, ... ist flächig und vorzugsweise fest mit der größeren Komponente 3.1, 3.2, ... dieser Bipolarplatte 2.1, 2.2, ... verbunden. Beide Komponenten 3.1, 3.2, ... und 4.1, 4.2, ... haben jeweils eine größere Biegesteifigkeit als die Membran 9.1, 9.2, ... jeder Membran-Elektroden-Einheit 1.1, 1.2, .... und sind bevorzugt gleich dick und jeweils dicker als eine Membran-Elektroden-Einheit.

Jede Membran-Elektroden-Einheit 1.x befindet sich unterhalb der größeren Komponente 3.x-1 einer Bipolarplatte 2.x-1 und oberhalb der kleineren Komponente 4.x der angrenzenden nächsten Bipolarplatte 2.x (x = 1, 2, ...). In Fig. 3 werden weiterhin zwei Bereiche 10.o.1 und 10.u.1gezeigt, in denen die Membran-Elektroden-Einheit 1.1 in elektrochemischer Wechselwirkung mit der darüber liegenden Bipolarplatte (nicht gezeigt) bzw. der darunterliegenden Bipolarplatte 2.1 tritt, nämlich die Anode 10.o.1 und die Kathode 10.u.1. Die übrigen Membran-Elektroden-Einheiten 1.2, 1.3, ... haben entsprechend positionierte Anoden und Kathoden. Die nach oben zeigende Anode 10.o.x der Membran-Elektroden-Einheit 1.x grenzt flächig an die größere Komponente 3.x-1 und die nach unten zeigende Kathode 10.u.x an die kleinere Komponente 4.x an. Die Anode 10.o.x und die Kathode 10.u.x sind elektrisch mit diesen Komponenten 3.x-1 bzw. 4.x verbunden, so dass Elektroden fließen. Eine umgekehrte Anordnung ist ebenfalls möglich, also eine Anordnung, in der die nach oben zeigenden Kathoden mit den größeren Komponenten 3.1, 3.2, ... und die nach unten zeigenden Anoden mit den kleineren Komponenten 4.1, 4.2, ... elektrisch verbunden sind.

Die Membran 9.1 der Membran-Elektroden-Einheit 1.1 steht in einem Bereich Ü über die Wechselwirkungs-Bereiche (Anode und Kathode) 10.u.1 und 10.o.1 über. Die Membran 9.1 kann nicht in elektrochemischer Wechselwirkung mit einer angrenzenden Bipolarplatte 2.1 treten. Sie wirkt als eine Isolierung zwischen den beiden angrenzenden Bipolarplatten und verhindert einen unerwünschten Stromfluss, z.B. in Form eines Funkenschlags, zwischen diesen beiden Bipolarplatten. Auch jede andere Membran-Elektroden-Einheit 1.x hat solche Bereiche (Anode und Kathode) 10.0.x, 10.u.x elektrochemischer Wechselwirkung und einen solchen überstehenden Bereich Ü der Membran 9.x. Zwischen einer Membran-Elektroden-Einheit 1.1, 1.2, ... und jeder angrenzenden Bipolarplatte 1.1, 1.2, ... ist bevorzugt jeweils eine Diffusions-Schicht (nicht gezeigt) angeordnet.

In jede Richtung, die senkrecht auf der Stapelrichtung SR steht, steht jede größere Komponente 3.1, 3.2, ... über die biegeschlaffe Membran 9.1, 9.2, ... jeder Membran-Elektroden-Einheit 1.1, 1.2, ... über. Die Membran-Elektroden-Einheit 1.1, 1.2, ... steht über jede kleinere Komponente 4.1, 4.2, ... über, vgl. Fig. 3. Dadurch wird eine Aussparung A.1, A.2, ... zwischen einer Membran-Elektroden-Einheit 1.1, 1.2, ... und der nächsten angrenzenden und mit Abstand darunter befindlichen größeren Komponente 3.1, 3.2, ... gebildet. Diese Aussparung A.1, A.2, ... umgibt die gesamte Umfangsfläche derjenigen kleineren Komponente 4.1, 4.2, ..., die sich zwischen dieser größeren Komponente 3.1, 3.2, ... und dieser Membran-Elektroden-Einheit 1.1, 1.2, ... befindet. Jede kleinere Komponente 3.x steht über die beiden Wechselwirkungs-Bereiche 10.u.x, 10.o.x der Membran-Elektroden-Einheit 1.x über.

Die größeren Komponenten 3.1, 3.2, ... und auch die kleineren Komponenten 4.1, 4.2, ... haben eine erheblich größere Biegesteifigkeit als die biegeschlaffen Membrane 9.1, 9.2, ... der Membran-Elektroden-Einheiten 1.1, 1.2, .... Weil die größeren Komponenten 3.1, 3.2, ... eine ausreichend große Biegesteifigkeit besitzen, ist es möglich, beim Aufstapeln der plattenförmigen Elemente zum Brennstoffzellen-Stapel 100 die größeren Komponenten 3.1, 3.2, ... an einer starren Stapelkante SK auszurichten, die sich parallel zur Stapelrichtung SR erstreckt, vgl. Fig. 4. Die größeren Komponenten 3.1, 3.2, ... sind dann in wenigstens einer Richtung bündig ausgerichtet. Möglich ist, den Stapel 100 an zwei Stapelkanten auszurichten, die sich beide parallel zur Stapelrichtung SR erstrecken und senkrecht aufeinander stehen, wodurch der Stapel 100 in zwei Richtungen ausgerichtet wird. Möglich, aber dank der hohen Biegesteifigkeit nicht erforderlich ist es, zum Ausrichten eine Nut in jeder größeren Komponente 3.1, 3.2, ... vorzusehen und die größeren Komponenten 3.1, 3.2, ... mit Hilfe dieser Nut auszurichten.

Wegen derer geringen Biegesteifigkeit kann die Schwerkraft den überstehenden Bereich einer Membran 9.1, 9.2, ... einer Membran-Elektroden-Einheit 1.1, 1.2, ... nach unten verbiegen. Dies kann insbesondere beim Herstellen des Brennstoffzellen-Stapels 100 geschehen, wenn die plattenförmigen Bestandteile übereinander in die Stapelrichtung SR aufgestapelt werden und noch nicht zusammengepresst sind, aber auch im Einsatz. In der Ausgestaltung nach Fig. 3 kann dies aber nicht zu einem unerwünschten Stromfluss oder sogar zu einem Kurzschluss führen. Der überstehende Bereich Ü einer Membran 9.1, 9.2, ..., der von der Schwerkraft noch unten bewegt wird, verbleibt in der Aussparung A.1, A.2,... oder berührt von oben die größere Komponente 3.1, 3.2, ... der angrenzenden Bipolarplatte, aber nicht die nächste Membran-Elektroden-Einheit.

Fig. 4 zeigt beispielhaft, wie ein Brennstoffzellen-Stapel 100 gemäß der Ausführungsform von Fig. 3 aufgestapelt werden kann. Die Membran-Elektroden-Einheiten 1.1, 1.2, ..., die größeren Komponenten 3.1, 3.2, ... und die kleineren Komponenten 4.1, 4.2, ... werden getrennt voneinander hergestellt und zu einer Stelle transportiert, in der sie zu dem Brennstoffzellen-Stapel 100 aufgeschichtet werden. Die Membran-Elektroden-Einheiten 1.1, 1.2, ... die größeren Komponenten 3.1, 3.2, ... und die kleineren Komponenten 4.1, 4.2, ... werden aufeinander gestapelt, so dass immer abwechselnd eine Membran-Elektroden-Einheit 1.1, 1.2, ... und eine Bipolarplatte 2.1, 2.2, ... gestapelt wird. Die biegesteife Bipolarplatten 2.1, 2.2, ... - genauer: die größeren Komponenten 3.1, 3.2, ... - werden hierbei an der Stapelkante SK ausgerichtet. Vorzugsweise wurde die größere Komponente 3.1, 3.2, ... vor dem Aufstapeln fest mit der kleineren Komponente 4.1, 4.2, ... einer Bipolarplatte 2.1, 2.2, ... verbunden, so dass auch die kleineren Komponenten 4.1, 4.2, ... mit Hilfe der Stapelkante SK ausgerichtet werden, weil sie fest mit den größeren Komponenten 3.1, 3.2, ... verbunden sind. Auch dann, wenn eine Membran-Elektroden-Einheit 1.1, 1.2, ... mit biegeschlaffer Membran 9.1, 9.2, ... nicht exakt in der gewünschten Position auf dem obersten Element des bereits gebildeten Stapels, also z.B. der obersten größeren Komponente 3.1, 3.2, ... positioniert wird, wird dank der aktuell obersten überstehenden und an der Stapelkante SK ausgerichteten größeren Komponente 3.1, 3.2, ... und der fest mit dieser verbundenen obersten kleineren Komponente 4.1, 4.2, ... die Gefahr eines Kurzschlusses signifikant reduziert - verglichen mit der Ausgestaltung von Fig. 2. Die größeren Komponenten 3.1, 3.2, ... stehen soweit über die Membran-Elektroden-Einheiten 1.1, 1.2, ... über, dass eine Membran-Elektroden-Einheit nicht in Kontakt mit der Stapelkante SK kommt, sondern stets ein Abstand auftritt.

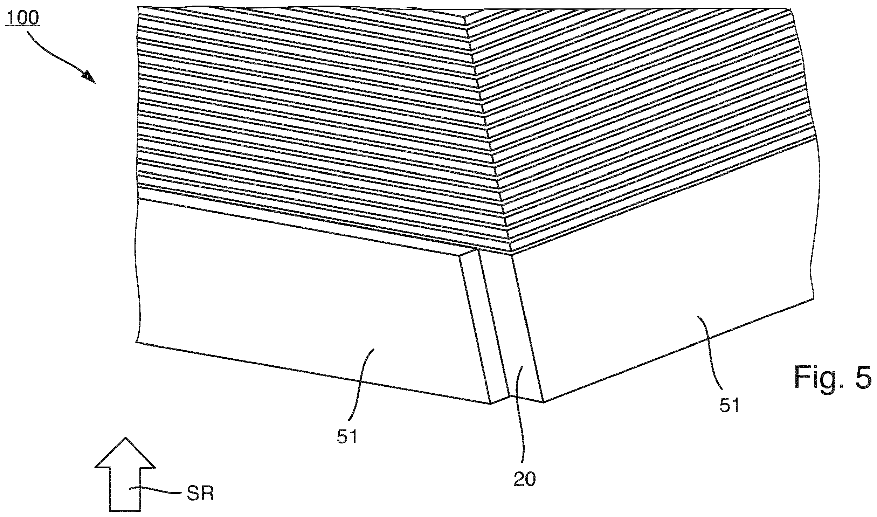

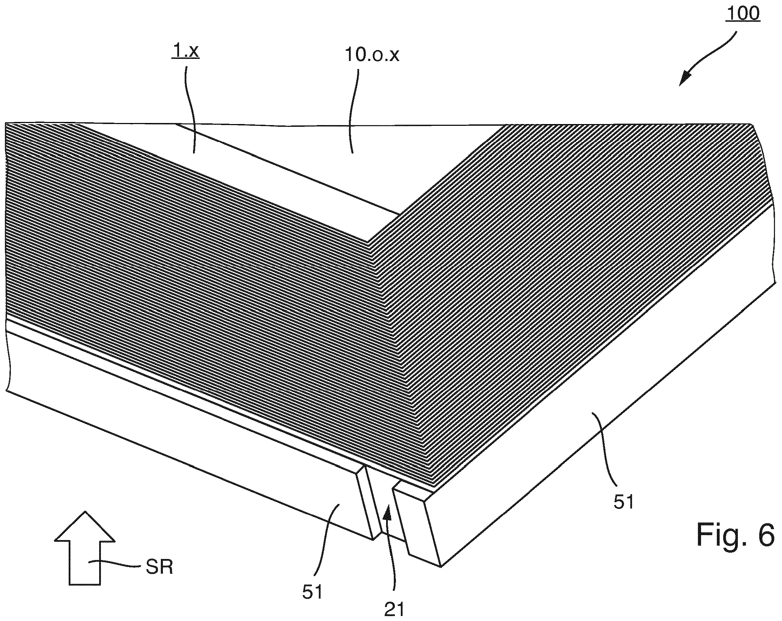

In Fig. 4 wurde eine Möglichkeit gezeigt, um den Stapel 100 an einer starren Stapelkante SK auszurichten. Fig. 5 und Fig. 6 zeigen eine zusätzliche oder alternative Möglichkeit, die plattenförmigen Elemente des Brennstoffzellen-Stapels 100 bei der Herstellung auszurichten. An der Bodenplatte 51 unter dem Brennstoffzellen-Stapel 100 ist eine Nut 20, 21 positioniert. Im Beispiel von Fig. 5 ist die Nut 20 an einer Ecke der Bodenplatte 51 positioniert, im Beispiel von Fig. 6 mit einem Abstand zu dieser Ecke. An oder in der Nähe von anderen Ecken der Bodenplatte 51 können weitere Nute angebracht sein. Vor dem Aufstapeln lässt sich die Bodenplatte 51 dadurch in eine gewünschte Position verbringen, dass die Nut 20, 21 in Kontakt mit einem starren länglichen Element (nicht gezeigt) gebracht wird, welches sich in die Stapelrichtung SR erstreckt. Dieses starre längliche Element kann weiterhin dazu verwendet werden, um beim Aufstapeln der Membran-Elektroden-Einheiten 1.1, 1.2, ... und der Bipolarplatten die biegesteife Bipolarplatten 2.1, 2.2, ... auf eine Kante auszurichten.

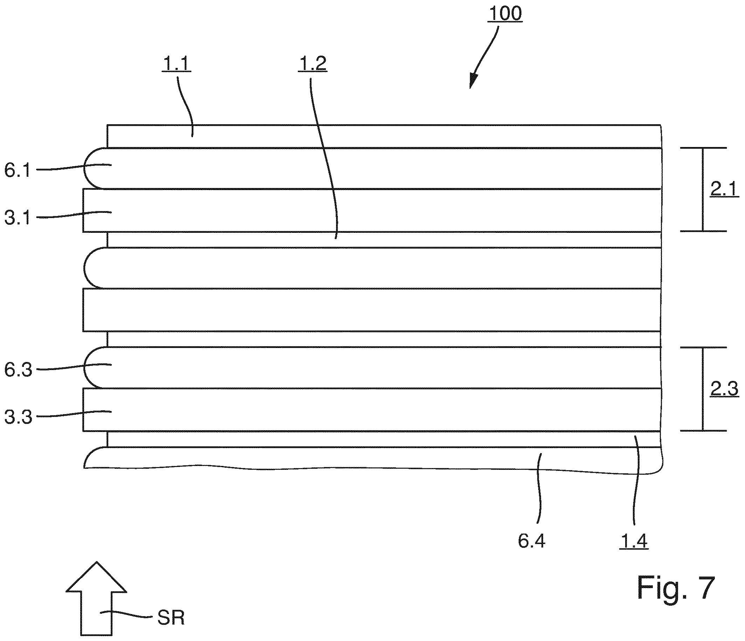

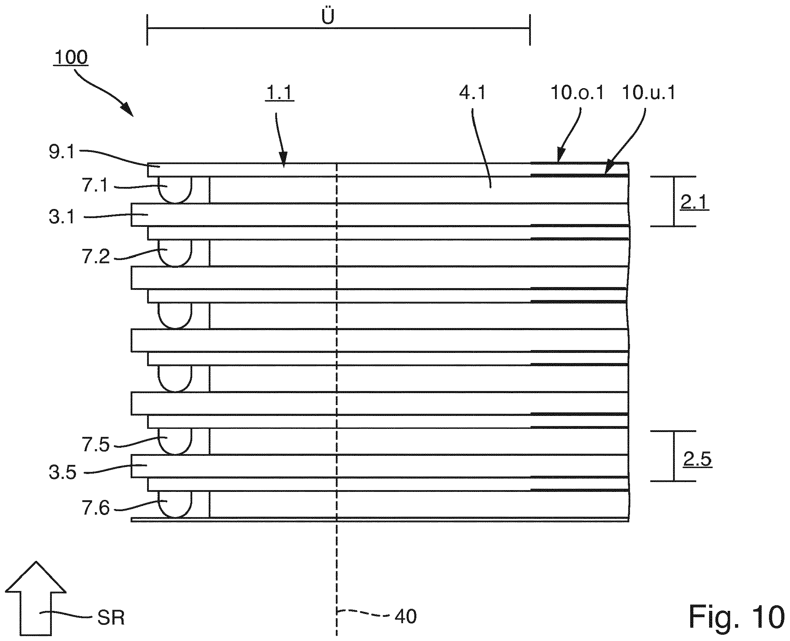

In der ersten Ausgestaltung gemäß Fig. 3 und Fig. 4 sind die Aussparungen A.1, A.2, ... nicht ausgefüllt, sondern können von einem Fluid durchströmt werden. Fig. 7 bis Fig. 9 zeigen eine erste Ausführungsform von Abdichtungen 6.1, 6.2, ... in den Aussparungen A.1, A.2, .... Fig. 10 zeigt eine zweite Ausführungsform von solchen Abdichtungen 7.1, 7.2, .... Die Abdichtungen 6.1, 6.2, ..., 7.1, 7.2, ... sind vorzugsweise verformbar und können aus dem gleichen Material wie die Membrane 9.1, 9.2, ... der Membran-Elektroden-Einheiten 1.1, 1.2, ... gefertigt sein oder aus einem anderen Material hergestellt sein.

Jede Abdichtung 6.1, 6.2, ..., 7.1, 7.2, ... hat im Ausführungsbeispiel mehrere Funktionen:
- Die Abdichtung 6.x, 7.x stützt die biegeschlaffe Membran 9.x der darüber liegenden Membran-Elektroden-Einheit 1.x.
- Die Abdichtung 6.x, 7.x ist elektrisch isolierend und verhindert, dass die gestützte Membran-Elektroden-Einheit 1.x in elektrischem Kontakt mit der darunter befindlichen Membran-Elektroden-Einheit 1.x+1 kommt und dadurch ein unerwünschter Stromfluss auftritt.
- Die elektrisch isolierende Abdichtung 6.x, 7.x verhindert, dass zwischen zwei benachbarten größeren Komponenten 3.x-1 und 3.x ein unerwünschter elektrischer Stromfluss auftritt.
- Die Abdichtung 6.x, 7.x reduziert den Fluss von Fluid in die und aus der angrenzenden kleineren Komponente 4.x

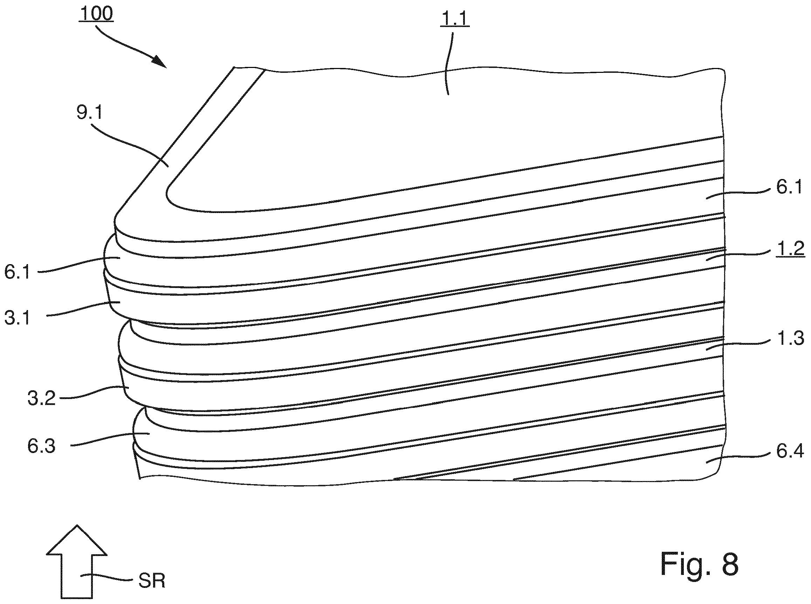

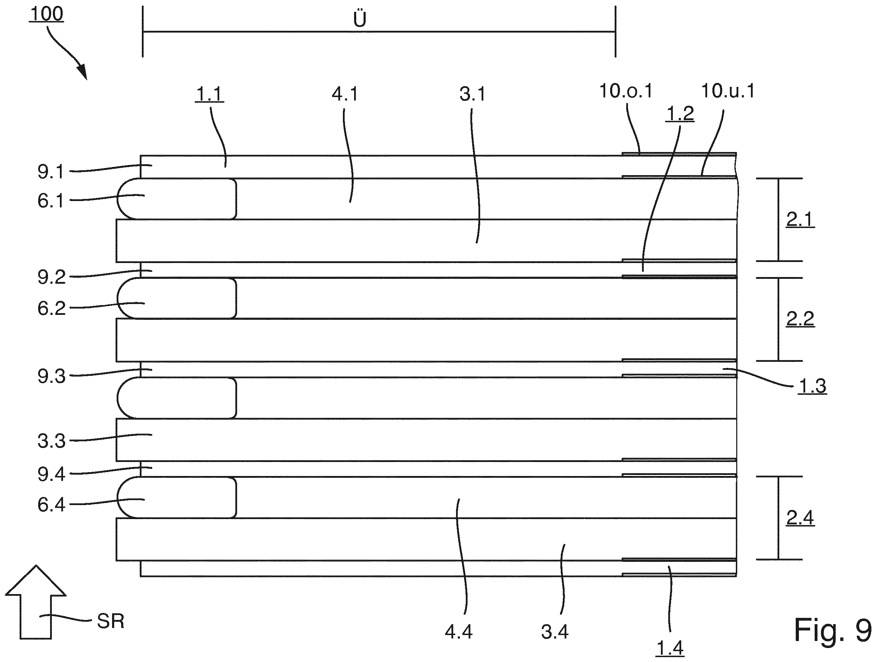

In der ersten Ausführungsform gemäß Fig. 7 bis Fig. 9 nehmen die Abdichtungen 6.1, 6.2, ... im Wesentlichen die gesamte Aussparung A.1, A.2, ... ein. Jede Abdichtung 6.x in der Aussparung A.x umgibt also die gesamte Umfangsfläche einer kleineren Komponente 4.x und hat eine wulstförmige umlaufende Außenkante. Fig. 8 und Fig. 9 zeigen schematisch die Ausdehnung einer Abdichtung 6.1, 6.2, ... in verschiedene Richtungen senkrecht zur Stapelrichtung SR. Die Querschnittsdarstellung von Fig. 9 zeigt weiterhin die Wechselwirkungsbereich 10.u.1, 10.o.1 (Anode und Kathode) sowie die überstehenden Membran 9.1 der obersten Membran-Elektroden-Einheit 1.1. Im Ausführungsbeispiel sind die Membran 9.1 und die Abdichtung 6.1 so bemessen, dass nur der überstehende Bereich Ü der Membran 9.1 in Kontakt mit der Abdichtung 6.1 kommt und daher die Abdichtung 6.1 nicht in Berührung mit den Wechselwirkungs-Bereichen 10.u.1 und 10.o.1 kommt. Das entsprechende gilt für die übrigen Membran-Elektroden-Einheiten 1.2, 1.3, ... Figur 9 zeigt weiterhin, dass die größeren Elemente 3.1, 3.2,... und die Abdichtungen 6.1, 6.2, ... eine durchgehende Kante bilden. Beim Aufstapeln der plattenförmigen Elemente kann diese Kante an einer starren Stapelkante SK ruhen, vgl. Figur 4, so dass die Bestandteile des Stapels 100 ausgerichtet werden. Möglich ist auch, dass die größeren Komponenten 3.1, 3.2, ... über die Abdichtungen 6.1, 6.2, ... überstehen.

Fig. 10 zeigt eine zweite Ausführungsform für die Abdichtungen, bei der die Abdichtungen 7.1, 7.2, ... nur einen Teil der Aussparungen A.1, A.2, ... einnehmen. Die Abdichtungen 7.1, 7.2,... haben die Form von Wülsten. Jede wulstförmige Abdichtung 7.x hat - gesehen in die Stapelrichtung SR - eine größere Abmessung als diejenige Aussparung A.x, in der die Abdichtung 7.x sich befindet. Die größere Komponente 3.x steht über die Membran 9.x sowie über die Abdichtung 7.x über. Zwischen der Abdichtung 7.x und der kleineren Komponente 3.x tritt ein umlaufender Spalt auf.

In einer Ausgestaltung ist die Abdichtung 7.x an der Membran 9.x der darüber liegenden Membran-Elektroden-Einheit 1.x befestigt. Vorzugsweise ist die Abdichtung 7.x z.B. mit Hilfe einer Klebeverbindung im überstehenden Bereich Ü der Membran 9.x an der darüber liegenden Membran-Elektroden-Einheit 1.x befestigt. Die Abdichtung 7.x greift von oben in eine korrespondierende umlaufende Nut (nicht gezeigt) in der oberen Oberfläche der darunter befindlichen größeren Komponente 3.x ein. Die Befestigung an der Membran-Elektroden-Einheit 1.x und der Eingriff in die Nut der größeren Komponente 3.x bringen sowohl die Abdichtung 7.x als auch die verbundene Membran-Elektroden-Einheit 1.x bei der Herstellung des Brennstoffzellen-Stapels 100 in die richtige Position und halten sie später in dieser richtigen Position.

In einer anderen Ausgestaltung ist die Abdichtung 7.x an der darunter liegenden größeren Komponente 3.x befestigt und greift in eine Nut ein, die im überstehenden Bereich Ü in die untere Oberfläche der darunter befindlichen Membran 9.x eingefügt ist. Auch diese Ausgestaltung erleichtert es, eine weitere Membran-Elektroden-Einheit auf den bereits gebildeten Stapel 100 zu positionieren. Die Ausgestaltung von Fig. 10 lässt sich auch ohne eine Nut in der äußeren Komponente 3.x oder in der Membran 9.x realisieren.

Im Folgenden werden verschiedene mögliche Ausgestaltungen beschrieben, wie diese Abdichtungen 6.x, 7.x hergestellt und in die Aussparung A.x eingefügt werden. Diese Ausgestaltungen lassen sich sowohl für die erste Ausführungsform (Fig. 7 bis Fig. 9) als auch für die zweite Ausführungsform (Fig. 10) anwenden.

In einer Ausgestaltung werden diese Abdichtungen 6.1, 6.2, ..., 7.1, 7.2, ... getrennt von den Membran-Elektroden-Einheiten 1.1, 1.2, ... und den Bipolarplatten 2.1, 2.2, ... gefertigt und geprüft, beispielsweise in Form von O-Ringen aus Gummi oder einem anderen elastischen Material, und bei der Herstellung des Brennstoffzellen-Stapels 100 in die Aussparungen A.1, A.2, ... eingefügt, nachdem die plattenförmigen Elemente zum Stapel 100 aufgestapelt worden sind.

In einer anderen Ausgestaltung werden die Abdichtungen 6.1, 6.2, ..., 7.1, 7.2, ... mit den Membran-Elektroden-Einheiten 1.1, 1.2, ... verbunden, bevor die plattenförmigen Elemente zum Brennstoffzellen-Stapel 100 aufgeschichtet werden. Jeweils eine Membran-Elektroden-Einheit 1.x mitsamt einer an die Membran-Elektroden-Einheit 1.x montierten Abdichtung 6.x, 7.x wird bevorzugt so auf eine größere Komponente 3.x gelegt, dass die Abdichtung 6.x, 7.x nach unten zeigt und die kleinere Komponente 4.x umgibt. Dank der Abdichtung 6.x, 7.x bleibt die Membran-Elektroden-Einheit 1.x in einem Abstand von dieser größeren Komponente 3.x. Vorzugsweise wird ein Druck von oben auf die Membran-Elektroden-Einheit 1.x ausgeübt, so dass die Abdichtung 6.x, 7.x vollständig die darunter befindliche kleinere Komponente 4.x umgibt und die biegeschlaffe Membran-Elektroden-Einheit 1.x dadurch - in gewissen Grenzen - in einer gewünschten Position gehalten wird. Möglich ist auch, dass eine Abdichtung 6.x, 7.x vorab an eine größere Komponente 3.x befestigt wird. Die größere Komponente 3.x mit der Abdichtung 6.x, 7.x wird so auf den bereits gebildeten Stapel gelegt, dass die Abdichtung 6.x, 7.x nach oben zeigt. Die Membran-Elektroden-Einheit 1.x wird auf die Ebene gelegt, die durch die kleinere Komponente 3.x und die Abdichtung 6.x, 7.x gebildet wird.

In einer weiteren Ausgestaltung werden die Abdichtungen 6.1, 6.2, ... dadurch nachträglich in die Aussparungen A.1, A.2, ... des bereits aufgeschichteten Brennstoffzellen-Stapels 100 eingefügt, dass ein flüssiges Dichtungsmaterial in die Aussparungen A.1, A.2, ... eingefügt wird, z. B. durch Spritzgießen, und abkühlt und dadurch erstarrt. Beispielsweise wird das Dichtungsmaterial erhitzt und in die Aussparungen A.1, A.2, ... hineingespritzt oder hineindrückt oder anderweitig eingefügt, beispielsweise nach Art eines Bauschaums. Das erstarrte Dichtungsmaterial bildet die Abdichtungen 6.1, 6.2, ...

Im Folgenden wird eine Ausführungsform skizziert, wie bei der Herstellung weiter vorgegangen wird, um aus dem Brennstoffzellen-Stapel 100 mit den Membran-Elektroden-Einheiten 1.1, 1.2, ..., den Bipolarplatten 2.1, 2.2, ... und den Abdichtungen 6.1, 6.2, ..., 7.1, 7.2, ... eine einsatzbereite Brennstoffzellen-Anordnung 90 zu erhalten, die so wie in Fig. 1 gezeigt aufgebaut ist. Der Stapel 100 wird auf der Bodenplatte 51 erzeugt. Auf den Stapel 100 wird die Deckplatte 50 positioniert und nach unten gedrückt, so dass der Stapel 100 zusammengedrückt wird. In einer Ausgestaltung werden jetzt die Abdichtungen in die Aussparungen eingefügt. Nunmehr werden die vertikalen Stromschienen 40, 41, ... an mindestens einer Seitenfläche des Stapels 100 angebracht und vorzugsweise mit den überstehenden Bipolarplatten 2.1, 2.2, ... verbunden, beispielsweise mit Klammern und / oder Federn. Diese Stromschienen werden mit elektrischen Kontakten verbunden, die vorzugsweise in der Deckplatte 50 angeordnet sind und den elektrischen Strom liefern.

Vorzugsweise wird anschließend ein Isoliermittel auf die vier Seitenflächen des zusammengepressten Stapels 100 aufgebracht, um diese Seitenflächen von der Ummantelung 60 elektrisch zu isolieren. Ein solches Isoliermittel kann flüssig sein und auf die Seitenflächen aufgespritzt oder aufgepinselt werden. Möglich ist auch, den Stapel 100 in ein Tauchbad zu verbringen und das Isoliermittel in diesem Tauchbad aufzubringen. Das Isoliermittel trägt bevorzugt dazu bei, den zusammengepressten Stapel 100 zu imprägnieren, und kann auf Basis eines Harzes hergestellt sein. Nunmehr wird die Ummantelung 60 um den zusammengepressten und imprägnierten Stapel 100 und um die Stromschienen 40, 41,... herum gelegt. Weil die Seitenflächen mit Hilfe des Isoliermittels elektrisch isoliert sind, kann diese Ummantelung 60 aus einem elektrisch leitenden Material, z.B. Aluminium, hergestellt sein.

**Bezugszeichen**

| | |
|---|---|
| 1.1, 1.2, ... | Membran-Elektroden-Einheiten, umfassen jeweils eine Anode 10.o.1, ..., eine Kathode 10.u.1, ... und eine Membran 9.1, 9.2, ... , die eine kleinere Biegesteifigkeit als die Anode und die Kathode hat und über die Anode und die Kathode übersteht |
| 2.1, 2.2, ... | Bipolarplatten, umfassen jeweils eine größere Komponente 3.1, 3.2, ... und eine kleinere Komponente 4.1, 4.2, ..., haben eine größere Biegesteifigkeit als die Membrane 9.1, 9.2, ... |
| 3.1, 3.2, ... | größere Komponenten der Bipolarplatten 2.1, 2.2, ..., stehen über die Membrane 9.1, 9.2, ... über |
| 4.1, 4.2, ... | kleinere Komponenten der Bipolarplatten 2.1, 2.2, ..., über welche die Membrane 9. 1, 9.2, ... Überstehen |
| 6.1, 6.2, ... | erste Ausführungsform von Abdichtungen zwischen den Membran-Elektroden-Einheiten 1.1, 1.2, ... und den größere Komponenten 3.1, 3.2, ..., nehmen die gesamten Aussparungen A.1, A.2, ... ein |
| 7.1, 7.2, ... | zweite Ausführungsform von Abdichtungen zwischen den Membran-Elektroden-Einheiten 1.1, 1.2, ... und den größere Komponenten 3.1, 3.2, ..., haben die Form von Wülsten in den Aussparungen A.1, A.2, ... |
| 9.1, 9.2, ... | Membran einer Membran-Elektroden-Einheit 1.1, 1.2, ..., steht in jede Richtung sowohl über die Anode als auch über die Katode über |
| 10.u.1, 10.o.1, ... | Bereiche, in denen eine Membran-Elektroden-Einheit 1.1, 1.2, ... in elektrochemischer Wechselwirkung mit den beiden angrenzenden Bipolarplatten 2.1, 2.2, ... tritt |
| 20,21 | Nut an der Bodenplatte 51, zum Positionieren der Bodenplatte 51 und / oder zum Ausrichten des Brennstoffzellen-Stapels 100 verwendet |
| 22 | Nut in einer Membran-Elektroden-Einheit 1.1, 1.2, ... |
| 40, 41 | Stromschienen aus Kupfer, erstrecken sich parallel zur Stapelrichtung SR, kontaktieren die Bipolarplatten 2.1, 2.2, ... |
| 50 | Deckplatte auf dem Brennstoffzellen-Stapel 100, bevorzugt aus Stahl gefertigt |
| 51 | Bodenplatte unter dem Brennstoffzellen-Stapel 100, bevorzugt aus Stahl gefertigt |
| 60 | seitliche Ummantelung, umgibt von vier Seiten den Brennstoffzellen-Stapel 100 |
| 90 | Brennstoffzellen-Anordnung, umfasst den Brennstoffzellen-Stapel 100, die seitliche Ummantelung 60, die Deckplatten 50, 51 und die Stromschienen 40, 41 |
| 100 | Brennstoffzellen-Stapel, umfasst die Membran-Elektroden-Einheiten 1.1, 1.2, ..., die Bipolarplatten 2.1, 2.2, ..., die Deckplatten 50 und 51 und die seitliche Ummantelung |
| A.1, A.2, ... | Aussparung zwischen einer Membran-Elektroden-Einheit 1.1, 1.2, ... und einer beabstandet angrenzenden größeren Komponente 3.1, 3.2, ..., kann teilweise oder vollständig mit einer Abdichtung 6.1, 6.2, ..., 7.1, 7.2, ... ausgefüllt sein |
| SK | Stapelkante, an der die größeren Komponenten 3.1, 3.2, ... des Brennstoffzellen-Stapels 100 beim Aufstapeln ausgerichtet werden |
| SR | Stapelrichtung, in die sich der Brennstoffzellen-Stapel 100 erstreckt |
| Ü | Bereich, in dem eine Membran 9. 1, 9. 2,... über die Kathode und die Anode übersteht |

## Patentansprüche

1. Brennstoffzellen-Stapel (100) umfassend
• eine Abfolge von plattenförmigen Membran-Elektroden-Einheiten (1.1, 1.2, ...) und
• eine Abfolge von Bipolarplatten (2.1, 2.2, ...),
wobei jede Membran-Elektroden-Einheit (1.1, 1.2, ...)jeweils
• eine Kathode (10.u.1),
• eine Anode (10.o.1) und
• eine Membran zwischen der Kathode (10.u.1) und der Anode (10.o.1)
umfasst,
wobei jede Membran-Elektroden-Einheit (1.1, 1.2, ...) zwischen zwei Bipolarplatten (2.1, 2.2, ...) angeordnet ist,
wobei jede Bipolarplatte (2.1, 2.2, ...)
• elektrisch leitend ist und
• elektrisch leitend mit einer Membran-Elektroden-Einheit (1.1, 1.2, ...) verbunden ist und
wobei der Brennstoffzellen-Stapel (100) sich in einer Stapelrichtung (SR) erstreckt und
wobei jede Membran-Elektroden-Einheit (1.1, 1.2, ...) und jede Bipolarplatte (2.1, 2.2, ...) sich in jeweils einer Ausdehnungs-Ebene erstrecken, die senkrecht auf der Stapelrichtung (SR) steht und
die jeweilige Membran (9.1, 9.2, ...)jeder Membran-Elektroden-Einheit (1.1, 1.2, ...) in der Ausdehnungs-Ebene
sowohl über die Anode (10.o.1) als auch über die Kathode (10.u.1) übersteht,
**dadurch gekennzeichnet, dass**
jede Bipolarplatte (2.1, 2.2, ...) in mindestens eine Richtung in der Ausdehnungs-Ebene über die jeweilige Membran (9.1, 9.2, ...) jeder angrenzenden Membran-Elektroden-Einheit (1.1, 1.2, ...) übersteht,
wobei die jeweilige Biegesteifigkeit jeder Bipolarplatte (2.1, 2.2, ...) größer ist als die Biegesteifigkeit der Membran (9.1, 9.2, ...) einer Membran-Elektroden-Einheit (1.1, 1.2, ...).

2. Brennstoffzellen-Stapel (100) nach Anspruch 1,
**dadurch gekennzeichnet, dass**
jede Bipolarplatte (2.1, 2.2, ...) in jede Richtung, die senkrecht auf der Stapelrichtung (SR) steht,
über die jeweilige Membran (9.1, 9.2, ...) jeder angrenzenden Membran-Elektroden-Einheit (1.1, 1.2, ...) übersteht.

3. Brennstoffzellen-Stapel (100) nach Anspruch 1 oder Anspruch 2,
**dadurch gekennzeichnet, dass**
jede Bipolarplatte (2.1, 2.2, ...)
• eine plattenförmige kleinere Komponente (4.1, 4.2, ...) und
• eine plattenförmige größere Komponente (3.1, 3.2, ...)
umfasst,
wobei die kleinere Komponente (4.1, 4.2, ...) flächig an die größere Komponente (3.1, 3.2, ...) der Bipolarplatte (2.1, 2.2, ...) angrenzt,
wobei jede Membran-Elektroden-Einheit (1.1, 1.2, ...) zwischen
• der kleineren Komponente (4.1, 4.2, ...) einer ersten Bipolarplatte (2.1, 2.2, ...) und
• der größeren Komponente (3.1, 3.2, ...) einer zweiten Bipolarplatte (2.1, 2.2, ...) angeordnet ist,
wobei die kleinere Komponente (4.1, 4.2, ...) und die größere Komponente (3.1, 3.2, ...) jeder Bipolarplatte (2.1, 2.2, ...) sich in jeweils einer Ausdehnungs-Ebene erstrecken, die senkrecht auf der Stapelrichtung (SR) steht,
wobei die jeweilige Biegesteifigkeit jeder kleineren Komponente (4.1, 4.2, ...) und diejenige jeder größeren Komponente (3.1, 3.2, ...) größer sind als die Biegesteifigkeit einer Membran-Elektroden-Einheit (1.1, 1.2, ...),
wobei jede der beiden Komponenten (3.1, 3.2, ..., 4.1, 4.2, ...) einer Bipolarplatte (2.1, 2.2, ...)
• elektrisch leitend ist und
• elektrisch leitend mit der jeweils angrenzenden Membran-Elektroden-Einheit (1.1, 1.2, ...) verbunden ist und
wobei die größere Komponente (3.1, 3.2, ...) einer Bipolarplatte (2.1, 2.2, ...) in mindestens eine Richtung, die senkrecht auf der Stapelrichtung (SR) steht,
über die kleinere Komponente (4.1, 4.2, ...) dieser Bipolarplatte (2.1, 2.2, ...) und über die jeweilige Membran (9.1, 9.2, ...) jeder angrenzenden Membran-Elektroden-Einheit (1.1, 1.2, ...) übersteht.

4. Brennstoffzellen-Stapel (100) nach Anspruch 3,
**dadurch gekennzeichnet, dass**
jede Membran-Elektroden-Einheit (1.1, 1.2, ...) in jede Richtung, die senkrecht auf der Stapelrichtung (SR) steht,
über die angrenzende kleinere Komponente (4.1, 4.2, ...) einer Bipolarplatte (2.1, 2.2, ...) übersteht,
so dass eine Aussparung (A.1, A.2, ...) zwischen der angrenzenden größeren Komponente (3.1, 3.2, ...) und der angrenzenden Membran-Elektroden-Einheit (1.1, 1.2, ...) gebildet wird,
welche die gesamte Umfangsfläche der kleineren Komponente (4.1, 4.2, ...) umgibt.

5. Brennstoffzellen-Stapel (100) nach Anspruch 4,
**dadurch gekennzeichnet, dass**
eine elektrische isolierende Abdichtung (6.1, 6.2, ..., 7.1, 7.2, ...) in diese Aussparung (A.1, A.2, ...) aufgenommen ist.

6. Brennstoffzellen-Stapel (100) nach Anspruch 5,
**dadurch gekennzeichnet, dass**
jede Abdichtung (6.1, 6.2, ..., 7.1, 7.2, ...) mit einer angrenzenden Membran-Elektroden-Einheit (1.1, 1.2, ...) flächig verbunden ist.

7. Brennstoffzellen-Stapel (100) nach Anspruch 5 oder Anspruch 6,
**dadurch gekennzeichnet, dass**
die Abdichtung (6.1, 6.2, ..., 7.1, 7.2, ...) und die Membran (9.1, 9.2, ...) der angrenzenden Membran-Elektroden-Einheit (1.1, 1.2, ...)
ein einziges Bauteil bilden.

8. Brennstoffzellen-Stapel (100) nach einem der Ansprüche 5 bis 7,
**dadurch gekennzeichnet, dass**
die Abdichtung (7.1, 7.2, ...) in eine Nut in der Oberfläche der an die Aussparung (A.1, A.2, ...) angrenzenden größeren Komponente (3.1, 3.2, ...) eingreift.

9. Brennstoffzellen-Stapel (100) nach einem der Ansprüche 5 bis8,
**dadurch gekennzeichnet, dass**
die Abdichtung (6.1, 6.2, ...) die gesamte Umfangsfläche der kleineren Komponente (4.1, 4.2, ...) umgibt.

10. Brennstoffzellen-Stapel (100) nach Anspruch9,
**dadurch gekennzeichnet, dass**
die Abdichtung (6.1, 6.2, ...) mit der gesamten Umfangsfläche der kleineren Komponente (4.1, 4.2, ...) flächig verbunden ist.

11. Brennstoffzellen-Stapel (100) nach einem der Ansprüche 5 bis 10,
**dadurch gekennzeichnet, dass**
die Abdichtung (6.1, 6.2, ...) in mindestens eine Richtung, die senkrecht auf der Stapelrichtung (SR) steht,
bündig mit der angrenzenden größeren Komponente (3.1, 3.2, ...) abschließt.

12. Brennstoffzellen-Stapel (100) nach Anspruch 11,
**dadurch gekennzeichnet, dass**
alle Abdichtungen (6.1, 6.2, ...) und alle größeren Komponenten (3.1, 3.2, ...) in diese Richtung bündig abschließen, so dass eine durchgehende Kante gebildet wird.

13. Brennstoffzellen-Stapel (100) nach einem der Ansprüche 5 bis 12,
**dadurch gekennzeichnet, dass**
die Abdichtung (6.1, 6.2, ..., 7.1, 7.2, ...) in der Aussparung (A.1, A.2, ...)
• in Kontakt mit dem Membran (9.1, 9.2, ...) der oder jeder angrenzenden Membran-Elektroden-Einheit (1.1, 1.2, ...) kommt und
• einen Abstand zu jedem Wechselwirkungs-Bereich (10.o.1, 10.u.1) aufweist.

14. Brennstoffzellen-Stapel (100) nach einem der vorstehenden Ansprüche,
**dadurch gekennzeichnet, dass**
zwischen einer Bipolarplatte (2.1, 2.2, ...) und jeder angrenzenden Membran-Elektroden-Einheit (1.1, 1.2, ...) jeweils eine Diffusions-Schicht, die für Fluid durchlässig ist, angeordnet ist.

15. Brennstoffzellen-Stapel (100) nach einem der vorstehenden Ansprüche,
**dadurch gekennzeichnet, dass**
der Brennstoffzellen-Stapel (100) weiterhin mindestens einen Stromleiter (40, 41) umfasst, der
• elektrisch leitend ist und
• sich in eine Richtung parallel zur Stapelrichtung (SR) erstreckt,
wobei jede Bipolarplatte (2.1, 2.2, ...) elektrisch leitend mit dem oder mindestens einem Stromleiter (40, 41) verbunden ist.

16. Brennstoffzellen-Anordnung (90) umfassend
einen Brennstoffzellen-Stapel (100) nach einem der vorstehenden Ansprüche,
eine Umhüllung (50, 51, 60) um den Brennstoffzellen-Stapel (100) und
mindestens einen Stromleiter (40, 41), der
• elektrisch leitend ist und
• sich in eine Richtung parallel zur Stapelrichtung (SR) erstreckt,
wobei jede Bipolarplatte (2.1, 2.2, ...) elektrisch leitend mit dem oder mindestens einem Stromleiter (40, 41) verbunden ist und
wobei sich der oder jeder Stromleiter zwischen dem Brennstoffzellen-Stapel (100) und der Umhüllung (50, 51, 60) befindet.

17. Verfahren zur Herstellung eines Brennstoffzellen-Stapels (100) mit folgenden Schritten: Bereitstellen einer Abfolge von plattenförmigen Membran-Elektroden-Einheiten (1.1, 1.2, ...) wobei jede Membran-Elektroden-Einheit (1.1, 1.2, ...) jeweils
• eine Kathode (10.u.1),
• eine Anode (10.o.1) und
• eine Membran zwischen der Kathode (10.u.1) und der Anode (10.o.1) umfasst,
Bereitstellen einer Abfolge von Bipolarplatten (2.1, 2.2, ...), wobei jede Bipolarplatte (2.1, 2.2, ...) elektrisch leitend ist, wobei die jeweilige Biegesteifigkeit jeder Bipolarplatte (2.1, 2.2, ...) größer ist als die Biegesteifigkeit der Membran (9.1, 9.2, ...) einer Membran-Elektroden-Einheit (1.1, 1.2, ...);
Anordnen jeder Membran-Elektroden-Einheit (1.1, 1.2, ...) zwischen zwei Bipolarplatten (2.1, 2.2, ...); sodass jede Bipolarplatte elektrisch leitend mit einer Membran-Elektroden-Einheit (1.1, 1.2, ...) verbunden ist und ein Brennstoffzellen-Stapel (100) gebildet wird, der sich in einer Stapelrichtung (SR) erstreckt und wobei jede Membran-Elektroden-Einheit (1.1, 1.2, ...) und jede Bipolarplatte (2.1, 2.2, ...) sich in jeweils einer Ausdehnungs-Ebene erstrecken, die senkrecht auf der Stapelrichtung (SR) steht und sodass die jeweilige Membran (9.1, 9.2, ...) jeder Membran-Elektroden-Einheit (1.1, 1.2, ...) in der Ausdehnungs-Ebene sowohl über die Anode (10.o.1) als auch über die Kathode (10.u.1) übersteht und sodass jede Bipolarplatte (2.1, 2.2, ...) in mindestens eine Richtung in der Ausdehnungs-Ebene über die jeweilige Membran (9.1, 9.2, ...) jeder angrenzenden Membran-Elektroden-Einheit (1.1, 1.2, ...) übersteht.

## Claims

1. Fuel cell stack (100) comprising
• a series of plate-like membrane electrode units (1.1, 1.2, ...) and
• a series of bipolar plates (2.1, 2.2, ...),
wherein each membrane electrode unit (1.1, 1.2, ...) respectively comprises
• a cathode (10.u.1),
• an anode (10.o.1) and
• a membrane between the cathode (10.u.1) and the anode (10.o.1),
wherein each membrane electrode unit (1.1, 1.2, ...) is arranged between two bipolar plates (2.1, 2.2, ...),
wherein each bipolar plate (2.1, 2.2, ...)
• is electrically conducting and
• is connected in an electrically conducting manner to a membrane electrode unit (1.1, 1.2, ...) and
wherein the fuel cell stack (100) extends in a stacking direction (SR) and
wherein each membrane electrode unit (1.1, 1.2, ...) and each bipolar plate (2.1, 2.2, ...) extend respectively in a plane of extent that is perpendicular to the stacking direction (SR) and
the respective membrane (9.1, 9.2, ...) of each membrane electrode unit (1.1, 1.2, ...)
projects both beyond the anode (10.o.1) and beyond the cathode (10.u.1) in the plane of extent,
**characterized in that**
each bipolar plate (2.1, 2.2, ...) projects beyond the respective membrane (9.1, 9.2, ...) of each adjacent membrane electrode unit (1.1, 1.2, ...) in at least one direction in the plane of extent, wherein the respective bending stiffness of each bipolar plate (2.1, 2.2, ...) is greater than the bending stiffness of the membrane (9.1, 9.2, ...) of a membrane electrode unit (1.1, 1.2, ...).

2. Fuel cell stack (100) according to Claim 1,
**characterized in that**
each bipolar plate (2.1, 2.2, ...) projects in each direction that is perpendicular to the stacking direction (SR)
beyond the respective membrane (9.1, 9.2, ...) of each adjacent membrane electrode unit (1.1, 1.2, ... ).

3. Fuel cell stack (100) according to Claim 1 or 2,
**characterized in that**
each bipolar plate (2.1, 2.2, ...) comprises
• a plate-like smaller component (4.1, 4.2, ...) and
• a plate-like larger component (3.1, 3.2, ...),
wherein the smaller component (4.1, 4.2, ...) lies flat against the larger component (3.1, 3.2, ...) of the bipolar plate (2.1, 2.2, ...),
wherein each membrane electrode unit (1.1, 1.2, ...) is arranged between
• the smaller component (4.1, 4.2, ...) of a first bipolar plate (2.1, 2.2, ...) and
• the larger component (3.1, 3.2, ...) of a second bipolar plate (2.1, 2.2, ...),
wherein the smaller component (4.1, 4.2, ...) and the larger component (3.1, 3.2, ...) of each bipolar plate (2.1, 2.2, ...) extend respectively in a plane of extent that is perpendicular to the stacking direction (SR),
wherein the respective bending stiffness of each smaller component (4.1, 4.2, ...) and that of each larger component (3.1, 3.2, ...) are greater than the bending stiffness of a membrane electrode unit (1.1, 1.2, ...),
wherein each of the two components (3.1, 3.2, ..., 4.1, 4.2, ...) of a bipolar plate (2.1, 2.2, ...)
• is electrically conducting and
• is connected in an electrically conducting manner to the respectively adjacent membrane electrode unit (1.1, 1.2, ...) and
wherein the larger component (3.1, 3.2, ...) of a bipolar plate (2.1, 2.2, ...) projects in at least one direction that is perpendicular to the stacking direction (SR) beyond the smaller component (4.1, 4.2, ...) of this bipolar plate (2.1, 2.2, ...) and beyond the respective membrane (9.1, 9.2, ...) of each adjacent membrane-electrode unit (1.1, 1.2, ...).

4. Fuel cell stack (100) according to Claim 3,
**characterized in that**
each membrane electrode unit (1.1, 1.2, ...) projects in each direction that is perpendicular to the stacking direction (SR)
beyond the adjacent smaller component (4.1, 4.2, ...) of a bipolar plate (2.1, 2.2, ...),
so that between the adjacent larger component (3.1, 3.2, ...) and the adjacent membrane electrode unit (1.1, 1.2, ...) there is formed a clearance (A.1, A.2, ...),
which surrounds the entire circumferential surface of the smaller component (4.1, 4.2, ...).

5. Fuel cell stack (100) according to Claim 4,
**characterized in that**
this clearance (A.1, A.2, ...) accommodates an electrical insulating seal (6.1, 6.2, ..., 7.1, 7.2, ...).

6. Fuel cell stack (100) according to Claim 5,
**characterized in that**
each seal (6.1, 6.2, ..., 7.1, 7.2, ...) is connected flat against an adjacent membrane electrode unit (1.1, 1.2, ...).

7. Fuel cell stack (100) according to Claim 5 or Claim 6,
**characterized in that**
the seal (6.1, 6.2, ..., 7.1, 7.2, ...) and the membrane (9.1, 9.2, ...) of the adjacent membrane electrode unit (1.1, 1.2, ...) form a single component.

8. Fuel cell stack (100) according to one of Claims 5 to 7,
**characterized in that**
the seal (7.1, 7.2, ...) engages in a groove in the surface of the larger component (3.1, 3.2, ...) adjacent to the clearance (A.1, A.2, ...).

9. Fuel cell stack (100) according to one of Claims 5 to 8,
**characterized in that**
the seal (6.1, 6.2, ...) surrounds the entire circumferential surface of the smaller component (4.1, 4.2, ...).

10. Fuel cell stack (100) according to Claim 9,
**characterized in that**
the seal (6.1, 6.2, ...) is connected flat against the entire circumferential surface of the smaller component (4.1, 4.2, ...).

11. Fuel cell stack (100) according to one of Claims 5 to 10,
**characterized in that**
the seal (6.1, 6.2, ...) finishes flush with the adjacent larger component (3.1, 3.2, ...) in at least one direction that is perpendicular to the stacking direction (SR).

12. Fuel cell stack (100) according to Claim 11,
**characterized in that**
all of the seals (6.1, 6.2, ...) and all of the larger components (3.1, 3.2, ...) finish flush in this direction, so that a continuous edge is formed.

13. Fuel cell stack (100) according to one of Claims 5 to 12,
**characterized in that**
the seal (6.1, 6.2, ..., 7.1, 7.2, ...) in the clearance (A.1, A.2, ...)
• comes into contact with the membrane (9.1, 9.2, ...) of the or each adjacent membrane electrode unit (1.1, 1.2, ...) and
• is at a distance from each area of interaction (10.o.1, 10.u.1).

14. Fuel cell stack (100) according to one of the preceding claims,
**characterized in that**
a diffusion layer that is permeable to fluid is respectively arranged between a bipolar plate (2.1, 2.2, ...) and each adjacent membrane electrode unit (1.1, 1.2, ...).

15. Fuel cell stack (100) according to one of the preceding claims,
**characterized in that**
the fuel cell stack (100) also comprises at least one current conductor (40, 41), which
• is electrically conducting and
• extends in a direction parallel to the stacking direction (SR),
wherein each bipolar plate (2.1, 2.2, ...) is connected in an electrically conducting manner to the or at least one current conductor (40, 41).

16. Fuel cell assembly (90) comprising
a fuel cell stack (100) according to one of the preceding claims,
an enclosure (50, 51, 60) around the fuel cell stack (100) and
at least one current conductor (40, 41), which
• is electrically conducting and
• extends in a direction parallel to the stacking direction (SR),
wherein each bipolar plate (2.1, 2.2, ...) is connected in an electrically conducting manner to the or at least one current conductor (40, 41) and
wherein the or each current conductor is located between the fuel cell stack (100) and the enclosure (50, 51, 60).

17. Method for producing a fuel cell stack (100) with the following steps:
providing a series of plate-like membrane electrode units (1.1, 1.2, ...), wherein each membrane electrode unit (1.1, 1.2, ...) respectively comprises
• a cathode (10.u.1),
• an anode (10.o.1) and
• a membrane between the cathode (10.u.1) and the anode (10.o.1),
providing a series of bipolar plates (2.1, 2.2, ...),
wherein each bipolar plate (2.1, 2.2, ...) is electrically conducting, wherein the respective bending stiffness of each bipolar plate (2.1, 2.2, ...) is greater than the bending stiffness of the membrane (9.1, 9.2, ...) of a membrane electrode unit (1.1, 1.2, ...);
arranging each membrane electrode unit (1.1, 1.2, ...) between two bipolar plates (2.1, 2.2, ...); so that each bipolar plate is connected in an electrically conducting manner to a membrane electrode unit (1.1, 1.2, ...) and a fuel cell stack (100) which extends in a stacking direction (SR) is formed and wherein each membrane electrode unit (1.1, 1.2, ...) and each bipolar plate (2.1, 2.2, ...) extend respectively in a plane of extent that is perpendicular to the stacking direction (SR) and so that the respective membrane (9.1, 9.2, ...) of each membrane electrode unit (1.1, 1.2, ...) projects both beyond the anode (10.o.1) and beyond the cathode (10.u.1) in the plane of extent and so that each bipolar plate (2.1, 2.2, ...) projects beyond the respective membrane (9.1, 9.2, ...) of each adjacent membrane electrode unit (1.1, 1.2, ...) in at least one direction in the plane of extent.

## Revendications

1. Empilement de cellules à combustible (100) comprenant
• une succession d'unités membrane-électrode (1.1, 1.2,...) en forme de plaque et
• une succession de plaques bipolaires (2.1, 2.2,...), chaque unité membrane-électrode (1.1, 1.2, ...) comprenant
• une cathode (10.u.1),
• une anode (10.o.1) et
• une membrane située entre la cathode (10.u.1) et l'anode (10.1),
chaque unité membrane-électrode (1.1, 1.2,...) étant disposée entre deux plaques bipolaires (2.1, 2.2,...), chaque plaque bipolaire (2.1, 2.2,...)
• étant électriquement conductrice et
• étant reliée électriquement à une unité membrane-électrode (1.1, 1.2,...) et
l'empilement de cellules à combustible (100) s'étendant dans une direction d'empilement (SR) et
chaque unité membrane-électrode (1.1, 1.2,...) et chaque plaque bipolaire (2.1, 2.2,...) s'étendant dans un plan d'extension respectif qui est perpendiculaire à la direction d'empilement (SR) et
la membrane respective (9.1, 9.2,...) de chaque unité membrane-électrode (1.1, 1.2,...) faisant saillie, dans le plan d'extension, à la fois de l'anode (10.o.1) et de la cathode (10.u.1),
**caractérisé en ce que**
chaque plaque bipolaire (2.1, 2.2,...) fait saillie, dans au moins une direction du plan d'extension, de la membrane respective (9.1, 9.2,...) de chaque unité membrane-électrode adjacente (1.1, 1.2,...),
la rigidité en flexion respective de chaque plaque bipolaire (2.1, 2.2,...) étant supérieure à la rigidité en flexion de la membrane (9.1, 9.2,...) d'une unité membrane-électrode (1.1, 1.2,...).

2. Empilement de cellules à combustible (100) selon la revendication 1,
**caractérisé en ce que**
chaque plaque bipolaire (2.1, 2.2,...) fait saillie, dans chaque direction perpendiculaire à la direction d'empilement (SR), de la membrane respective (9.1, 9.2,...) de chaque unité membrane-électrode adjacente (1.1, 1.2, ...) .

3. Empilement de cellules à combustible (100) selon la revendication 1 ou la revendication 2,
**caractérisé en ce que**
chaque plaque bipolaire (2.1, 2.2,...) comprend
• un petit composant (4.1, 4.2,...) en forme de plaque et
• un grand composant (3.1, 3.2,...) en forme de plaque,
le petit composant (4.1, 4.2,...) étant adjacent de manière sensiblement bidirectionnelle au grand composant (3.1, 3.2,...) de la plaque bipolaire (2.1, 2.2,...) ,
chaque unité membrane-électrode (1.1, 1.2,...) étant disposée entre
• le petit composant (4.1, 4.2,...) d'une première plaque bipolaire (2.1, 2.2,...) et
• le grand composant (3.1, 3.2,...) d'une deuxième plaque bipolaire (2.1, 2.2,...),
le petit composant (4.1, 4.2,...) et le grand composant (3.1, 3.2,...) de chaque plaque bipolaire (2.1, 2.2,...) s'étendant dans un plan d'extension respectif perpendiculaire à la direction d'empilement (SR),
la rigidité en flexion respective de chaque petit composant (4.1, 4.2,...) et celle de chaque grand composant (3.1, 3.2,...) étant supérieures à la rigidité en flexion d'une unité membrane-électrode (1.1, 1.2,...), chacun des deux composants (3.1, 3.2, ..., 4.1, 4.2,...) d'une plaque bipolaire (2.1, 2.2,...)
• étant électriquement conducteur et
• étant relié électriquement à l'unité membrane-électrode adjacente (1.1, 1.2,...) et
le grand composant (3.1, 3.2,...) d'une plaque bipolaire (2.1, 2.2,...) faisant saillie, dans au moins une direction perpendiculaire à la direction d'empilement (SR), du petit composant (4.1, 4.2,...) de cette plaque bipolaire (2.1, 2.2,...) et de la membrane respective (9.1, 9.2,...) de chaque unité membrane-électrode adjacente (1.1, 1.2,...).

4. Empilement de cellules à combustible (100) selon la revendication 3,
**caractérisé en ce que**
chaque unité membrane-électrode (1.1, 1.2,...) fait saillie, dans chaque direction perpendiculaire à la direction d'empilement (SR), du petit composant adjacent (4.1, 4.2,...) d'une plaque bipolaire (2.1, 2.2,...),
de façon à ménager entre le grand composant adjacent (3.1, 3.2,...) et l'unité membrane-électrode adjacente (1.1, 1.2,...) un évidement (A.1, A.2,...) qui entoure toute la surface périphérique du petit composant (4.1, 4.2,...) .

5. Empilement de cellules à combustible (100) selon la revendication 4,
**caractérisé en ce que**
une garniture d'étanchéité (6.1, 6.2,..., 7.1, 7.2,...) est reçue dans cet évidement (A.1, A.2,...).

6. Empilement de cellules à combustible (100) selon la revendication 5,
**caractérisé en ce que**
chaque garniture d'étanchéité (6.1, 6.2, 7.1, 7.2,...) est reliée de manière sensiblement bidimensionnelle à une unité membrane-électrode adjacente (1.1, 1.2,...).

7. Empilement de cellules à combustible (100) selon la revendication 5 ou la revendication 6,
**caractérisé en ce que**
la garniture d'étanchéité (6.1, 6.2,..., 7.1, 7.2,...) et la membrane (9.1, 9.2,...) de l'unité membrane-électrode adjacente (1.1, 1.2,...) forment un seul composant.

8. Empilement de cellules à combustible (100) selon l'une des revendications 5 à 7,
**caractérisé en ce que**
la garniture d'étanchéité (7.1, 7.2,...) s'engage dans une rainure de la surface du grand composant (3.1, 3.2,...) adjacent à l'évidement (A.1, A.2,...).

9. Empilement de cellules à combustible (100) selon l'une des revendications 5 à 8,
**caractérisé en ce que**
la garniture d'étanchéité (6.1, 6.2,...) entoure toute la surface périphérique du petit composant (4.1, 4.2,...).

10. Empilement de cellules à combustible (100) selon la revendication 9,
**caractérisé en ce que**
la garniture d'étanchéité (6.1, 6.2,...) est reliée de manière sensiblement bidimensionnelle à toute la surface périphérique du petit composant (4.1, 4.2,...).

11. Empilement de cellules à combustible (100) selon l'une des revendications 5 à 10,
**caractérisé en ce que**
la garniture d'étanchéité (6.1, 6.2,...) se termine, dans au moins une direction perpendiculaire à la direction d'empilement (SR), à fleur avec le grand composant adjacent (3.1, 3.2,...).

12. Empilement de cellules à combustible (100) selon la revendication 11,
**caractérisé en ce que**
toutes les garnitures d'étanchéité (6.1, 6.2,...) et tous les grands composants (3.1, 3.2,...) se terminent à fleur dans cette direction de manière à former un bord continu.

13. Empilement de cellules à combustible (100) selon l'une des revendications 5 à 12,
**caractérisé en ce que**
la garniture d'étanchéité (6.1, 6.2,..., 7.1, 7.2,...) dans l'évidement (A.1, A.2,...)
• vient en contact avec la membrane (9.1, 9.2,...) de l'unité ou de chaque unité membrane-électrode adjacente (1.1, 1.2,...) et
• est à une distance de chaque zone d'interaction (10.o.1, 10.u.1).

14. Empilement de cellules à combustible (100) selon l'une des revendications précédentes,
**caractérisé en ce que**
une couche de diffusion perméable au fluide est disposée entre une plaque bipolaire (2.1, 2.2,...) et chaque unité membrane-électrode adjacente (1.1, 1.2,...).

15. Empilement de cellules à combustible (100) selon l'une des revendications précédentes,
**caractérisé en ce que**
l'empilement de cellules à combustible (100) comprend en outre au moins un conducteur de courant (40, 41) qui
• est électriquement conducteur et
• s'étend dans une direction parallèle à la direction d'empilement (SR),
chaque plaque bipolaire (2.1, 2.2,...) étant reliée électriquement au conducteur de courant ou à au moins un conducteur de courant (40, 41).

16. Agencement de cellules à combustible (90) comprenant un empilement de cellules à combustible (100) selon l'une des revendications précédentes, une enveloppe (50, 51, 60) autour de l'empilement de cellules à combustible (100) et au moins un conducteur de courant (40, 41), qui
• est électriquement conducteur et
• s'étend dans une direction parallèle à la direction d'empilement (SR),
chaque plaque bipolaire (2.1, 2.2,...) étant reliée électriquement au conducteur de courant ou à au moins un conducteur de courant (40, 41) et
le ou chaque conducteur électrique étant situé entre l'empilement de cellules à combustible (100) et l'enveloppe (50, 51, 60).

17. Procédé de fabrication d'un empilement de cellules à combustible (100), le procédé comprenant les étapes suivantes :
fournir une succession d'unités membrane-électrode (1.1, 1.2...) en forme de plaque, chaque unité membrane-électrode (1.1, 1.2,...) comprenant
• une cathode (10.u.1),
• une anode (10.o.1) et
• une membrane entre la cathode (10.u.1) et l'anode (10.o.1),
fournir une succession de plaques bipolaires (2.1, 2.2,...), chaque plaque bipolaire (2.1, 2.2,...) étant électriquement conductrice, la rigidité en flexion respective de chaque plaque bipolaire (2.1, 2.2,...) étant supérieure à la rigidité en flexion de la membrane (9.1, 9.2,...) d'une unité membrane-électrode (1.1, 1.2, ...) ;
disposer chaque unité membrane-électrode (1.1, 1.2,...) entre deux plaques bipolaires (2.1, 2.2,...) ; de sorte que chaque plaque bipolaire soit reliée électriquement à une unité membrane-électrode (1.1, 1.2,...) et qu'un empilement de cellules à combustible (100) soit formé qui s'étend dans une direction d'empilement (SR) et chaque unité membrane-électrode (1.1, 1.2,...) et chaque plaque bipolaire (2.1, 2.2,...) s'étendent dans un plan d'extension perpendiculaire à la direction d'empilement (SR) et de sorte que la membrane respective (9.1, 9.2,...) de chaque unité membrane-électrode (1.1, 1.2,...) fasse saillie, dans le plan d'extension, de l'anode (10.o.1) et de la cathode (10.u.1) et de sorte que chaque bipolaire plaque (2.1, 2.2,...) fasse saillie, dans au moins une direction du plan d'extension, de la membrane respective (9.1, 9.2,...) de chaque unité membrane-électrode adjacente (1.1, 1.2,...).
